(19) Europäisches Patentamt / European Patent Office / Office européen des brevets

(11) **EP 3 354 394 A1**

(12) **EUROPEAN PATENT APPLICATION**

(43) Date of publication:
**01.08.2018 Bulletin 2018/31**

(51) Int Cl.:
**B23K 26/00** *(2014.01)*   **B23K 26/359** *(2014.01)*
**B23K 26/0622** *(2014.01)*   **B23K 26/06** *(2014.01)*

(21) Application number: **18152127.9**

(22) Date of filing: **17.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority:  **23.01.2017   US 201762449356 P**
          **03.01.2018   US 201815861272**

(71) Applicant: **Lumentum Operations LLC**
**Milpitas, California 95035 (US)**

(72) Inventors:
 • **OEHLER, Andreas**
   **CH-8952 Zurich (CH)**

 • **AMMANN, Hubert**
   **CH-8952 Zurich (CH)**
 • **BENETTI, Marco**
   **CH-8952 Zurich (CH)**
 • **WASSERMANN, Dominique**
   **CH-8952 Zurich (CH)**
 • **JAEGGI, Beat**
   **3005 Bern (CH)**
 • **REMUND, Stefan**
   **3400 Burgdorf (CH)**
 • **NEUENSCHWANDER, Beat**
   **3400 Burgdorf (CH)**

(74) Representative: **Murgitroyd & Company**
**Scotland House**
**165-169 Scotland Street**
**Glasgow G5 8PL (GB)**

(54) **MACHINING PROCESSES USING A RANDOM TRIGGER FEATURE FOR AN ULTRASHORT PULSE LASER**

(57)   A machining process, associated with a workpiece, may include controlling, by a control device, a pulse repetition frequency (PRF) of an ultrashort pulse laser. The PRF may be controlled to maintain a substantially constant distance, on the workpiece, between adjacent pulses on a path. The substantially constant distance may be maintained despite changes in a speed of the path relative to the workpiece. An amount of energy of each pulse on the path may be substantially constant despite changes to the PRF associated with controlling the PRF.

**FIG. 1B**

**EP 3 354 394 A1**

**Description**

TECHNICAL FIELD

The present disclosure relates generally to machining processes using an ultrashort pulse laser and, more particularly, to a machining process using an ultrashort pulse laser with a random trigger feature that allows a pulse repetition frequency (PRF) of the ultrashort pulse laser to be controlled, despite changes in a speed of a path relative to a workpiece, and allows an amount of energy of a given pulse from the ultrashort pulse laser to be controlled despite changes to the PRF.

BACKGROUND

Short pulse laser systems generate optical pulses having sub-microsecond pulse width and sub-millisecond temporal spacing. As used herein, a short pulse of light is an electromagnetic pulse whose time duration is less than a microsecond ($\mu$s). A short pulse laser includes an ultrashort pulse laser (sometimes referred to as an ultrafast laser) such as picosecond and femtosecond lasers and other lasers that can produce amplified pulses with sub-microsecond pulse width and sub-millisecond temporal resolution.

In a conventional ultrashort pulse laser, while a pulse repetition frequency (PRF) of the ultrashort pulse laser may be selectable, high energy pulses are typically produced at a fixed frequency during a machining process and, thus, have a relatively constant amount of energy. The PRF typically remains fixed during the machining process because changing the PRF during the machining process can result in negative side effects (e.g., pulse energy fluctuations that reduce process quality and/or damage the laser itself). In some cases, an ultrashort pulse laser may be configured with a pseudo-triggering feature (e.g., a pulse on demand (PoD) feature), a pre-amplifier pulse-picker, and/or the like, that introduces some flexibility with respect to timing of the pulses of the ultrashort pulse laser. However, such pseudo-triggering features can negatively impact process quality of a machining process that uses such an ultrashort pulse laser.

SUMMARY

According to some possible implementations, a machining process, associated with a workpiece, may include: controlling, by a control device, a PRF of an ultrashort pulse laser, wherein the PRF is controlled to maintain a substantially constant distance, on the workpiece, between adjacent pulses on a path, wherein the substantially constant distance is maintained despite changes in a speed of the path relative to the workpiece, and wherein an amount of energy of each pulse on the path is substantially constant despite changes to the PRF associated with controlling the PRF.

The substantially constant distance may be a distance that is less than or equal to 0.50 micrometers from a target distance.

A fluctuation in the amount of energy among the adjacent pulses on the path may be less than approximately 2% root mean square (RMS).

The PRF may be proportional to the speed of the path relative to the workpiece at a given time during the machining process.

The process may further comprise: determining the speed of the path relative to the workpiece; and wherein controlling the PRF of the ultrashort pulse laser may comprise: controlling the PRF based on the speed of the path relative to the workpiece.

The process may further comprise: controlling the amount of energy of each pulse on the path despite the changes to the PRF associated with the controlling the PRF.

The process may be a process associated with modifying a brittle material.

According to some possible implementations, a machining process, associated with a workpiece, may include: outputting, by an ultrashort pulse laser and onto the workpiece during the machining process, pulses based on a PRF; controlling, by a control device, the PRF of the ultrashort pulse laser based on changes in a speed of a path relative to the workpiece during the machining process, wherein the PRF of the ultrashort pulse laser is controlled such that, on the workpiece, a distance between locations of adjacent pulses on the path is controlled by the control device, wherein the distance is any distance within an operable distance range associated with the machining process; and wherein a pulse energy of the pulses on the path is controlled despite changes to the PRF associated with controlling the PRF, wherein the pulse energy of the pulses is any energy within an operable energy range of the ultrashort pulse laser.

The PRF of the ultrashort pulse laser may be controlled such that the distance between locations of adjacent pulses is substantially constant.

The pulse energy of the pulses may be controlled such that the pulse energy of the pulses is substantially constant.

Each of the pulses may comprise a pulse burst with an arbitrary number of pulses, wherein a burst energy of a given pulse burst may be controlled such that the burst energy is substantially constant despite changes to the PRF associated with the controlling of the PRF, wherein a burst envelope shape of the given pulse burst may be controlled such that the burst envelope shape is substantially unchanged despite changes to the PRF associated with the controlling of the PRF.

The PRF may be proportional to the speed of the path relative to the workpiece at a given time during the machining process.

The process may further comprise: determining the speed of the path relative to the workpiece; and wherein controlling the PRF of the ultrashort pulse laser may comprise: controlling the PRF based on the speed of the path relative to the workpiece.

The process may further comprise: controlling the pulse energy of the pulses despite the changes to the PRF associated with controlling the PRF.

The machining process may be a process associated with modifying a brittle material.

According to some possible implementations, a machining process, associated with a workpiece, may include: triggering, by a control device, pulses of an ultrashort pulse laser in accordance with changes in a speed of a path relative to the workpiece during the machining process, wherein a rate at which the pulses are triggered changes to maintain a substantially constant distance, on the workpiece, between adjacent pulses on the path; and controlling, by the control device or the ultrashort pulse laser, pulse energy of the pulses, wherein the pulse energy is controlled such that the pulse energy is substantially constant despite changes in the rate at which the pulses are triggered.

The substantially constant distance may be a distance that is less than 0.50 micrometers from a target distance.

A fluctuation in the pulse energy of the pulses may be less than approximately 2% root mean square (RMS).

A pulse repetition frequency (PRF) of the ultrashort pulse laser may be proportional to the speed of the path relative to the workpiece at a given time during the machining process, wherein the PRF may be associated with the triggering of the pulses.

The process may further comprise: determining the speed of the path relative to the workpiece, and wherein triggering the pulses of the ultrashort pulse laser comprises: triggering the pulses based on the speed of the path relative to the workpiece.

The machining process may be a process associated with modifying a brittle material.

According to some possible implementations, a machining process, associated with a workpiece, may include: providing a path relative to the workpiece; providing target energy levels for target locations along the path; providing a scanning speed that varies along the path; scanning, by a control device, an ultrashort pulse laser along the path, relative to the workpiece, in accordance with the scanning speed; and triggering, by the control device, a pulse from the ultrashort pulse laser for each target location along the path, wherein an energy level of each pulse is within 5% root mean square (RMS) of a corresponding target energy level for the target location, and wherein a location of each pulse, on the workpiece, is within 4 micrometers of the target location.

BRIEF DESCRIPTION OF THE DRAWINGS

Figs. 1A and 1B are diagrams illustrating a reduction in process quality when using an ultrashort pulse laser with a fixed PRF, and an improvement in process quality when using an ultrashort pulse laser with a random trigger feature, respectively;

Fig. 2A is a diagram of an example environment in which machining processes, described herein, may be implemented;

Fig. 2B is a diagram of example components of the ultrashort pulse laser system of Fig. 2A;

Fig. 3 is flow chart of an example process associated with controlling a pulse repetition frequency of an ultrashort pulse laser such that a distance between adjacent pulses on a path is substantially constant;

Figs. 4A-4G are diagrams and photographs associated with a first processing example illustrating and comparing use of an ultrashort pulse laser system with a random trigger feature for a machining process according to an example embodiment against other laser systems;

Figs. 5A-5E are diagrams of a second processing example illustrating use of an ultrashort pulse laser system with a random trigger feature for a machining process according to an example embodiment and illustrating use of other laser systems with other machining methods;

Figs. 6A-6D are diagrams of a third processing example illustrating and comparing use of an ultrashort pulse laser system with a random trigger feature for a machining process according to an example embodiment against other laser systems using other machining methods;

Figs. 7A-7C are diagrams of a fourth processing example illustrating and comparing use of an ultrashort pulse laser system with a random trigger feature for a machining process according to an example embodiment against another laser system; and

Fig. 8 is a flow chart of an example process associated with scanning an ultrashort pulse laser along a path, relative to a workpiece, in accordance with a scanning speed that varies along the path, and triggering a pulse from the ultrashort pulse laser for each target location along the path.

DETAILED DESCRIPTION

The following detailed description of example implementations refers to the accompanying drawings. The same reference numbers in different drawings may identify the same or similar elements. The implementations described below are merely examples and are not intended to limit the implementations to the precise forms disclosed. Instead, the implementations were selected for description to enable one of ordinary skill in the art to practice the implementations.

In a typical machining process (e.g., a micromachining process), a path (e.g., a path on which pulses are provided, or a path of a laser-matter interaction zone on a workpiece) of an ultrashort pulse laser moves across a workpiece by, for example, steering the laser beam (e.g., such that the path moves relative to the workpiece), by moving the workpiece (e.g., such that the workpiece moves relative to the path of the ultrashort pulse laser), or a combination thereof. Both throughput (e.g., an amount of time needed to perform the machining process) and process quality (e.g., a quality of performance of the machining process, such as a material removal rate, a presence of heat affected zones, a presence of debris, a smoothness of sides or edges, and/or the like) are important considerations associated with performing the machining process.

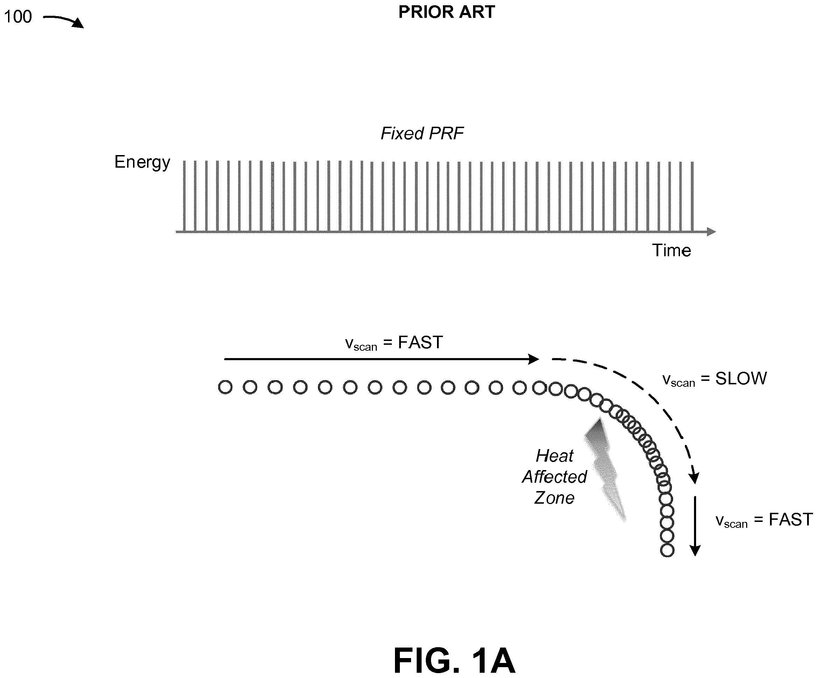

For a machining process that uses an ultrashort pulse laser with a fixed PRF, higher throughput can be achieved by moving the path across the workpiece at varying speeds (e.g., as fast as possible for a given geometry feature) throughout the machining process. However, variation in speed, when combined with the fixed PRF, reduces process quality. Fig. 1A is a diagram illustrating an example 100 of a reduction in process quality when using an ultrashort pulse laser with a fixed PRF at varying speeds during a machining process. As shown by the upper portion of Fig. 1A, the ultrashort pulse laser with a fixed PRF may maintain a stable pulse energy at the fixed PRF. However, as shown in the lower portion of Fig. 1A, when a speed of the path relative to the workpiece (identified as $v_{scan}$) varies throughout the machining process (e.g., from fast in straight features to slow in a curved feature, as indicated in Fig. 1A), the fixed PRF of the ultrashort pulse laser results in non-constant pulse spacing, thereby reducing process quality (e.g., by introducing a heat affected zone in the curved, slower velocity, section of the geometry).

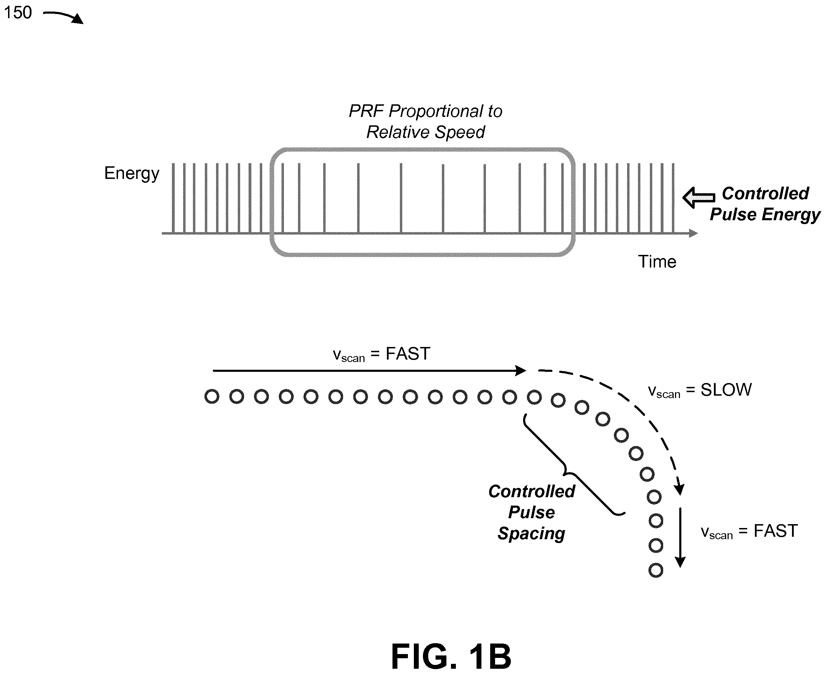

Conversely, an ultrashort pulse laser with a random-trigger feature may provide improved throughput while maintaining or improving process quality. Fig. 1B is a diagram illustrating an example 150 of an improvement in process quality when using an ultrashort pulse laser with a random trigger feature for a machining process. As shown in the upper portion of Fig. 1B, the ultrashort pulse laser with random trigger feature allows a PRF of the ultrashort pulse laser to be controlled (e.g., such that the PRF is proportional to a speed of the path relative to the workpiece). As further shown in the upper portion of Fig. 1B, energy of each pulse can also be controlled (e.g., kept constant), despite changes in the PRF of the ultrashort pulse laser. Thus, by controlling the PRF and as shown in the lower portion of Fig. 1B, pulse spacing can be controlled (e.g., such that a distance between adjacent pulses is substantially constant), thereby ensuring process quality of the machining process while improving throughput (e.g., by allowing for variations in speed).

In some cases, the ultrashort pulse laser with the random trigger feature provides improved process quality as compared to an ultrashort pulse laser configured with a pseudo-trigger feature. A pseudo-triggering feature can introduce some flexibility with respect to timing of the pulses of an ultrashort pulse laser, but process quality suffers as a result of the pseudo-triggering feature.

One approach for pseudo-triggering is a triggering with a post-amplifier pulse-picker. This approach is sometimes referred to as pulse-on-demand (PoD). In an ultrashort pulse laser with a post-amplifier pulse-picker, the post-amplifier pulse-picker is located after an amplifier and before an output of the laser beam. Here, the post-amplifier pulse-picker is configured to transmit or block any amplified pulses from the amplifier. This is sometimes referred to as a "trigger function" since the post-amplifier pulse-picker can be configured to transmit a pulse upon receiving a trigger. However, the post-amplifier pulse-picker cannot provide true trigger functionality since the post-amplifier pulse-picker is essentially a pulse gating mechanism and, thus, cannot alter pulse timing. If the post-amplifier pulse-picker receives a trigger at an arbitrary time, there may be no amplified pulse available, and the post-amplifier pulse-picker must wait for the next pulse to arrive. The end result is that timing of pulses with respect to the trigger is fairly random, which inhibits accurate positioning of pulses on the workpiece. An example of this limitation of the PoD approach is described in further detail below.

Another approach for increasing flexibility of an ultrashort pulse laser is using a pre-amplifier pulse-picker. Pulses from an oscillator (e.g., a picosecond oscillator) have a high repetition rate. This provides the pre-amplifier pulse-picker more pulses to choose from, in principle making more accurate pulse timing possible. However, arbitrary triggering before the amplifier can result in significant pulse energy fluctuations (e.g., 10-20% fluctuations), which results in reduced process quality in terms of an effect of the pulses on the workpiece and/or can potentially damage the ultrashort pulse laser itself.

The primary difference between the above two approaches is a tradeoff between stability and jitter. An ultrashort pulse laser with a post-amplifier pulse-picker provides pulses with stable energy but large timing jitter. In contrast, an ultrashort pulse-picker with a pre-amplifier pulse-picker provides pulses with reasonable timing jitter but poor energy stability. In either case, process quality suffers as a result of implementation of these techniques (e.g., either due to inaccurately spaced pulses or pulses of varying energy). In some cases, these two approaches can be combined to create a compromise that may be acceptable in some specific cases. However, while combining the two approaches can achieve timing jitter on the order of approximately 10 nanoseconds (e.g., due to the use of the pre-amplifier pulse picker), pulse energy fluctuations of approximately 10-20% can still occur (e.g., when an energy compensation scheme does not provide energy compensation for a particular frequency range around a preset PRF), which is not adequate for many applications.

Thus, an ultrashort pulse laser with a random trigger feature may be used in a machining process in order to overcome limitations of conventional ultrashort pulse lasers (e.g., an ultrashort pulse laser with a fixed PRF, an ultrashort pulse laser configured with a pseudo-trigger feature, an ultrashort pulse laser with a pre-amplifier pulse picker, and/or the like) and improve throughput and/or process quality of a given machining process.

In some implementations, the random trigger functionality allows the ultrashort pulse laser to provide pulses with low energy fluctuations (e.g., less than approximately 10% root mean square (RMS), less than approximately 5% RMS,1-2% RMS, and/or the like) with low timing jitter (e.g., less than $\pm 25$ nanoseconds (ns)) at a given scanning speed (e.g., 25mm/s, 10m/s, 25 m/s, greater than 25m/s, and/or the like). This level of stability and accuracy means that even at a relatively fast scanning speed, pulse positioning uncertainty on the workpiece may be negligible in most practical micromachining applications. For example, at a scanning speed of 10m/s, a position of a given pulse on a workpiece may be within approximately $\pm 0.25$ micrometers ($\mu$m) of a target location, which is negligible in most micromachining applications. Notably, with higher scanning speeds (e.g., greater than 10m/s), pulse position uncertainty may increase (e.g., such that a given pulse may not be within $\pm 0.25$ $\mu$m of a target location). Nonetheless, for a given scanning speed (e.g., greater than 10m/s, such as 25m/s or more) a comparatively higher pulse positioning uncertainty may be negligible in some micromachining applications.

Some implementations described herein provide machining processes using an ultrashort pulse laser with a random trigger feature in order to provide improved and/or optimized throughput and/or process quality. In some implementations, the improved and/or optimized throughput and/or process quality can be achieved because the random trigger feature allows the PRF of the ultrashort pulse laser to be controlled based on a speed of a path relative to a workpiece during a machining process, thereby allowing a distance between adjacent pulses to be fully controlled (e.g., kept substantially constant or selected). Moreover, the improved and/or optimized throughput and/or process quality can be achieved because the random trigger feature allows an amount of energy of a given pulse to be fully controlled, despite changes to the PRF.

For example, and as illustrated in example machining processes described below, a machining process that uses the ultrashort pulse laser with the random trigger feature may achieve improved throughput by reducing processing time to complete the machining process (e.g., as compared to an ultrashort pulse laser with a fixed PRF that uses a skywriting technique). In some cases, processing time can be significantly reduced (e.g., by up to approximately 40%), while achieving higher process quality, as described below.

As another example, and as illustrated in example machining processes described below, a machining process that uses the ultrashort pulse laser with the random trigger feature may (e.g., as compared to an ultrashort pulse laser with a constant PRF or an ultrashort pulse laser configured with a pseudo-trigger feature) achieve improved quality (e.g., through consistent and/or controlled surface roughness and/or engraving depth, through evenly spaced pulses, and/or the like) by allowing for full control of distances between any given pair of adjacent pulses.

As yet another example, and as illustrated in example machining processes described below, the ultrashort pulse laser with the random trigger feature may achieve improved accuracy by allowing for reduced timing-jitter (e.g., as compared to an ultrashort pulse laser that uses a pseudo-triggering technique), which reduces or eliminates pulse positioning jitter on the workpiece, thereby improving process quality (e.g., particularly as compared to a multi-pass machining process).

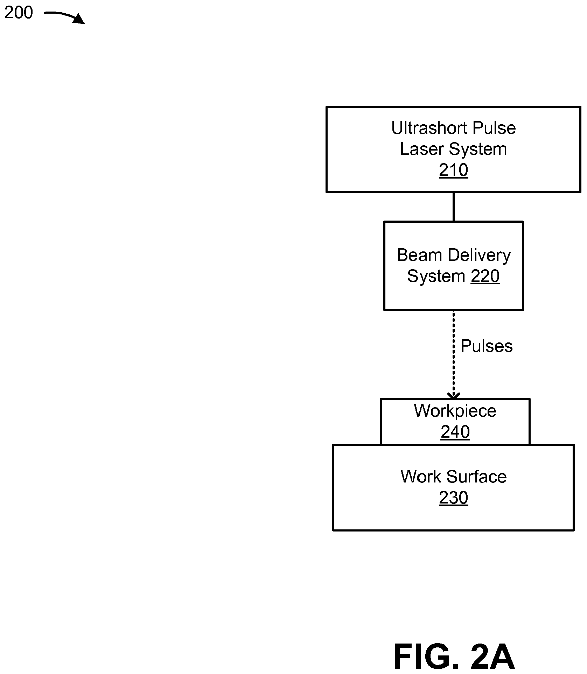

Fig. 2A is a diagram of an example environment 200 in which machining processes, described herein, may be implemented. As shown in Fig. 2A, environment 200 may include an ultrashort pulse laser system 210, a beam delivery system 220, a work surface 230, and a workpiece 240.

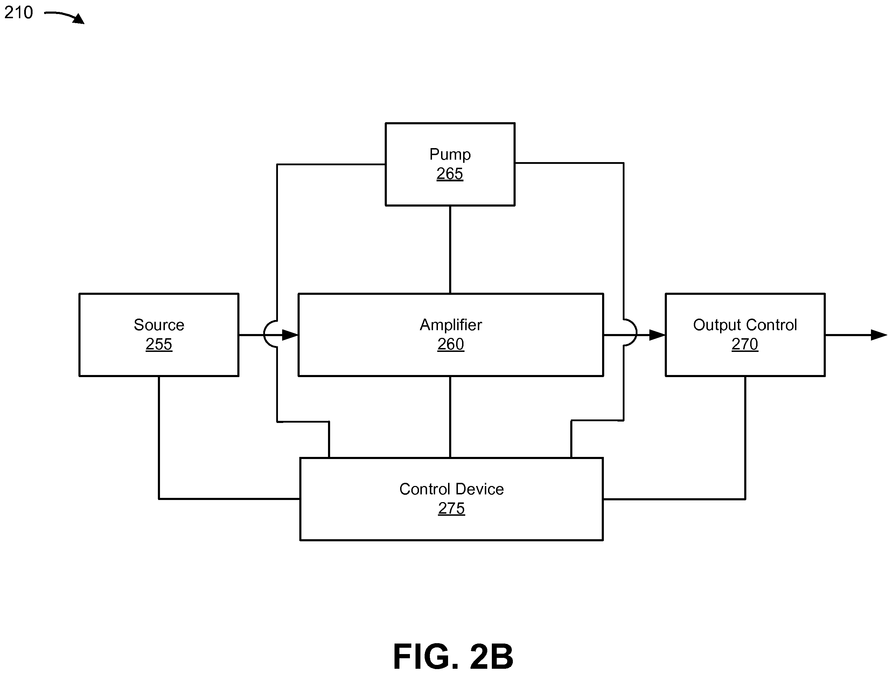

Ultrashort pulse laser system 210 includes one or more devices capable of outputting a pulsed optical beam based on a random (i.e., arbitrary) trigger with minimal timing jitter that allows pulse-to-pulse distances and/or pulse energy to be fully controlled, as described herein. For example, ultrashort pulse laser system 210 may include a short pulse laser (e.g., a picosecond pulse laser, a nanosecond pulse laser, a femtosecond pulse laser, and/or the like) having arbitrary pulse triggering and low energy fluctuations. In some implementations, ultrashort pulse laser system 210 is controlled by a control device. In some implementations, ultrashort pulse laser system 210 may output a pulsed optical beam for use in a machining process (e.g., a micromachining process, an ablating process, a cutting process, a marking process, and/or the like) associated with machining workpiece 240. Additional details regarding ultrashort pulse laser system 210 are provided below with regard to Fig. 2B.

Beam delivery system 220 includes one or more devices that can to provide a beam (e.g., pulses), output by ultrashort pulse laser system 210, on a path on workpiece 240. For example, beam delivery system 220 may include coated laser optics, coated and/or uncoated substrates (e.g., a Plano substrate, a curved substrate, a lens, etc.), a retardation plate, a polarizer, a beam guide, a beam moving mechanism (e.g., a galvanometer-based optical scanning system, a polygon scanning system, an acousto-optical scanner (sometimes referred to as an acousto-optic deflector), another type of electro-optic device, etc.), a motorized staging system, a beam delivery system control component (e.g. a control), one or more movable and/or tiltable mirrors, and/or the like. In some implementations, beam delivery system 220 can include a control device associated with generating a trigger signal (e.g., a trigger signal at a frequency proportional to a relative speed of the path) that triggers ultrashort pulse laser system 210 to provide a pulse (e.g., when beam delivery system 220 is a galvanometer-based optical scanning system).

Work surface 230 includes a surface to receive workpiece 240. For example, work surface 230 may include a surface on which to mount workpiece 240. In some implementations, work surface 230 may move (e.g., parallel to a plane of the page of Fig. 2A, perpendicular to the plane of the page of Fig. 2A) with respect to ultrashort pulse laser system 210 and/or with respect to beam delivery system 220 (e.g., based on a motorized staging system of work surface 230, etc.). Additionally, or alternatively, beam delivery system 220 may move or optical features within beam delivery system 220 may move (e.g., such that the path moves relative to workpiece 240). In other words, scanning may be performed by moving work surface 230/workpiece 240 relative to beam delivery system 220, by moving beam delivery system 220 relative to work surface 230/workpiece 240, by steering the optical output of ultrashort pulse laser system 210 over work surface 230/workpiece 240 with beam delivery system 220 (e.g., while work surface 230/workpiece 240 and beam delivery system 220 remain static/in-place), or some combination thereof. In some implementations, work surface 230 can include a control device associated with generating a trigger signal that triggers ultrashort pulse laser system 210 to provide a pulse (e.g., when work surface 230 230 includes a moveable part or stage associated with moving workpiece 240).

Workpiece 240 includes an object to be machined using a machining process. For example, workpiece may include a silicon-based material (e.g., glass), a metallic material (e.g., copper, stainless steel, and/or the like).

The number and arrangement of devices shown in Fig. 2A are provided as an example. In practice, there may be additional devices, fewer devices, different devices, or differently arranged devices than those shown in Fig. 2A. Furthermore, two or more devices shown in Fig. 2A may be implemented within a single device, or a single device shown in Fig. 2A may be implemented as multiple, distributed devices. Additionally, or alternatively, a set of devices (e.g., one or more devices) of environment 200 may perform one or more functions described as being performed by another set of devices of environment 200.

Fig. 2B is a diagram of example components of the ultrashort pulse laser system 210. As shown in Fig. 2B, ultrashort pulse laser system 210 can include a source 255, an amplifier 260 optically connected to source 255, a pump 265 connected to amplifier 260, an optional output control 270 optically connected to amplifier 260 and control device 275 connected to source 255 and optionally connected to amplifier 260, pump 265 and/or output control 270.

Ultrashort pulse laser system 210 outputs laser pulses having pulse widths anywhere in the range of microseconds, nanoseconds, picoseconds and femtoseconds. The output laser pulses have a temporal spacing anywhere in the ranges of seconds, milliseconds, microseconds, sub-microseconds, or the like. The output laser pulses may have maximum pulse repetition rates in the hertz (Hz) range, the kilohertz (kHz) range, the megahertz (MHz) range, or the like; however, it is not necessary for the output laser pulses to adhere to a repetition frequency. Rather, the laser pulses can be output at any arbitrary time. Whether or not the output laser pulses have a fixed repetition rate or are arbitrarily time spaced, ultrashort pulse laser system 210, provides a controllable energy level to each output pulse. The laser pulses may have energy anywhere in the range of, for example, sub-millijoules to joules.

Ultrashort pulse laser system 210 can be implemented in a variety of different laser configurations including master oscillator power amplifier (MOPA), regenerative amplifier or other configurations well known to the skilled person, which have been omitted for brevity alone.

Source 255 provides pulses of laser light to amplifier 260 under command of control device 275. Source 255 is configured to output short (or ultrashort) laser pulses at controllable energy levels and with arbitrary timing. Arbitrary timing includes any timing including random timing of pulses, on-demand triggering of pulses, pre-set patterns of pulses and fixed repetition rate pulses. In some embodiments, source 255 may comprise a laser diode. In some embodiments, source 255 may comprise a low energy, high PRF ultrafast seed oscillator optically coupled to a pulse-picker. As one possible example, source 255 may provide laser pulses at a frequency greater than or equal to approximately 5 megahertz (MHz). In alternative embodiments, source 255 may include a continuous wave laser for providing a low average power optical beam instead of low energy control pulses and a second laser may be used to provide high energy pulses.

By controlling the pulses and optical beam from source 255 before amplifier 260, it is possible to achieve greater regulation of amplifier with greater precision. In some implementations (e.g., implementations where source 255 includes a pulse-picker), source 255 may be capable of passing an optical signal to amplifier 260 at a particular efficiency (e.g., 0.01%, 0.1%, 1%, 10%, 50%, 90%, etc.) with less than 5% error. In some implementations, source 255 may be capable of passing optical pulses with different energies (e.g., energies in a range of an order of magnitude, energies in a range of two orders of magnitude, etc.) with a particular level of error (e.g., a sub-5% relative error, etc.). In some implementations, source 255 may be capable of passing an optical signal at a variable efficiency that can be changed, in some implementations, with a particular response time (for example, microsecond or nanosecond response time). In some implementations, source 255 may be capable of passing an optical signal at dynamically variable power/energy levels with a particular response time.

Amplifier 260 receives pulses from source 255 and outputs amplified, that is, higher energy level, pulses. Amplifier 260 may comprise any transient regime optical amplifier known to the skilled person. Example amplifier types include rod amplifiers, slab amplifiers, disk amplifiers and fiber amplifiers. Amplifier 260 may comprise an amplifier and/or a series of multiple amplifiers. Amplifier 260 may be configured for multi-pass, single pass or a combination of any number of single pass and/or multipass amplifiers in series. For example, amplifier may include one or more single pass amplifiers (e.g., in series), one or more multi-pass amplifiers (e.g., in series), and/or one or more single pass amplifiers and one or more multipass amplifiers in series. Amplifier 260 may output amplified pulses to an output control 270 or directly out of ultrashort pulse laser system 210. Amplifier 260 operates in the transient regime with continuous pumping, which provides a predictable increase of amplifier's stored energy when no light from source 255 is amplified. Amplifier 260 may include a gain medium (e.g., a fiber-based gain medium, a bulk gain medium, such as a rod, a slab, a disk, etc.), such as a laser crystal or laser glass (e.g., a neodymium-doped yttrium aluminum garnet (YAG), a ytterbium-doped tungstate crystal (e.g., a potassium gadolinium tungstate (KGW) crystal, a potassium yttrium tungstate (KYW) crystal), an erbium-doped YAG, a titanium-sapphire crystal, etc.), a ceramic gain medium, a composite gain medium, or the like.

Amplifier 260 has stored energy which represents the potential gain that amplifier 260 can provide to an optical pulse passing through amplifier gain medium. Amplifying a pulse decreases amplifier's stored energy and amplifier's stored energy should be replenished by pump 265 to continue amplifying pulses.

Pump 265 connects to amplifier 260 to increase amplifier's stored energy. In some embodiments, pump 265 electrically or optically connects to amplifier 260 and provides a predictable rate of increase to amplifier's stored energy. In some embodiments, pump 265 provides continuous pumping constantly providing energy to increase or replenish stored energy of amplifier 260. The gain medium of amplifier 260 may receive energy for amplification of optical signals from pump 265 in a process referred to herein as pumping.

The optional output control 270 receives amplified laser pulses from amplifier 260 and can be configured (e.g., by control device 275) to block, pass or partially pass the pulses. An example output control 270 includes a pulse-picker, a pulse-on-demand module that includes a pulse-picker, or another type of output control. Output control 270 may also include a wavelength converter (e.g., a nonlinear wavelength converter) based on a nonlinear crystal material, a photonic crystal fiber, a gas, or the like. In such implementations, additional output control elements may perform a frequency doubling process, a sum and difference frequency generation process, a Raman conversion process, a supercontinuum generation process, a high harmonic generation process, or the like. Partially passing a pulse reduces the energy of the pulse from its highest level (passing the pulse) to an intermediate level.

Control device 275 connects to and/or controls source 255, and optionally connects to and/or controls to amplifier 260, pump 265 and output control 270. Control device 275 coordinates regulating amplifier's stored energy and outputting higher energy output pulses from ultrashort pulse laser system 210 in response to a request, or a trigger, for an output pulse. In example embodiments, control device 275 regulates stored energy of amplifier 260 by balancing increasing stored energy from pump 265 by depleting stored energy using low energy, high frequency pulses or other low average power light from source 255.

Control device 275 may be implemented in software and/or hardware. For example, control device 275 may include a processor, such as a digital signal processor, a microprocessor, an integrated circuit (e.g., a photonic integrated circuit, an application-specific integrated circuit, etc.), a field-programmable gate array, or the like. Control device 275 may also include other components that interact with the processor, such as a memory device, a communication interface, an input component, and/or an output component. The memory device may store instructions or data used by the processor. The communication interface may permit the processor to communicate with other components of the laser system, to receive commands from external to the laser system, and/or to provide data external to the laser system. Control device 275 may include computer-readable instructions stored in a non-transient computer readable medium for execution by a general purpose computer, reconfigurable hardware (such as FPGAs), application specific hardware (such as ASICs) other electrical and combinations of these implementation technologies. In some implementations, control device 275 may be combined with a control of the beam delivery system 220 and/or a control of the work surface 230.

In some implementations, control device 275 regulates amplifier 260 using pre-defined time delays and knowledge of the rate of increase of amplifier's stored energy due to continuous pumping from pump 265. After amplifying a high energy input pulse, control device 275 does not pass low energy control pulses for a pre-defined time. Amplifier's stored energy, right after the amplification of a high energy input pulse, will decrease to the depleted level, so after the pre-defined time, the stored energy level will be known to be at the upper boundary. Once control device 275 requests control pulses with a pre-defined PRF and energy, the stored energy of amplifier 260 will remain in equilibrium between upper and lower boundaries, so control device 275 continues providing the control pulses until it receives a trigger. When control device 275 receives a trigger, it waits until the time that it would generate the next control pulse. The waiting time may be any amount of time between zero and a time between control pulses, depending on the timing of receiving the trigger. This uncertainty will eventually introduce a time delay jitter of the time between the trigger and the higher energy output pulse. When the waiting time ends, instead of passing the next control pulse, control device 275 stops the control pulses for a second pre-defined time interval. At this point, control device 275 knows amplifier's stored energy is at the upper boundary, thus the second time delay is pre-determined to allow amplifier's stored energy to increase to the target level. After the second time interval, control device 275 requests a high energy input pulse. The actions taken by control device 275 can then be repeated for each arbitrarily timed trigger. In this way, control device 275 may trigger pulses from ultrashort pulse laser system 210 at arbitrary time intervals, while the pulse energy is controlled.

In some implementations, the stored energy of amplifier 260 can be kept in a dynamic equilibrium, oscillating between an upper boundary and a lower boundary, below a target level while waiting to receive a trigger (e.g., from control device 275). When the stored energy of amplifier 260 reaches the upper boundary, a low energy control pulse is passed into amplifier 260, depleting the stored energy to the lower boundary. Passing low energy control pulses into the amplifier can continue indefinitely, while waiting for a trigger. In some embodiments, passing low energy control pulses occurs at a high frequency. When a trigger is received, the stored energy of amplifier 260 is allowed to increase to the target level and, upon reaching the target level, a high energy input pulse is released into amplifier 260, amplified into a higher energy output pulse, and ultimately output (e.g., with low timing delay).

In some implementations, control device 275 may control ultrashort pulse laser system 210 such that a PRF of ultrashort pulse laser system 210 and/or a pulse energy of pulses is fully controlled by control device 275. For example, control device 275 may control a PRF of ultrashort pulse laser system 210 based on changes in a speed of a path spot, associated with a beam provided by ultrashort pulse laser system 210, relative to workpiece 240 during a machining process, and/or may control an amount of energy of a given pulse from ultrashort pulse laser system 210, as described herein.

Further example implementations of an ultrashort pulse laser system 210 can be found in Ammann et al., U.S. Patent No. 9,570,877, entitled "Gain Control for Arbitrary Triggering of Short Pulse Lasers" which is incorporated herein in its entirety.

The number and arrangement of components shown in Fig. 2B are provided as an example. In practice, there may be additional components, fewer components, different components, or differently arranged components than those shown in Fig. 2B. Furthermore, two or more components shown in Fig. 2B may be implemented within a single component, or a single component shown in Fig. 2B may be implemented as multiple, distributed components. Additionally, or alternatively, a set of components (e.g., one or more components) of ultrashort pulse laser system 210 may perform one or more functions described as being performed by another set of components of ultrashort pulse laser system 210.

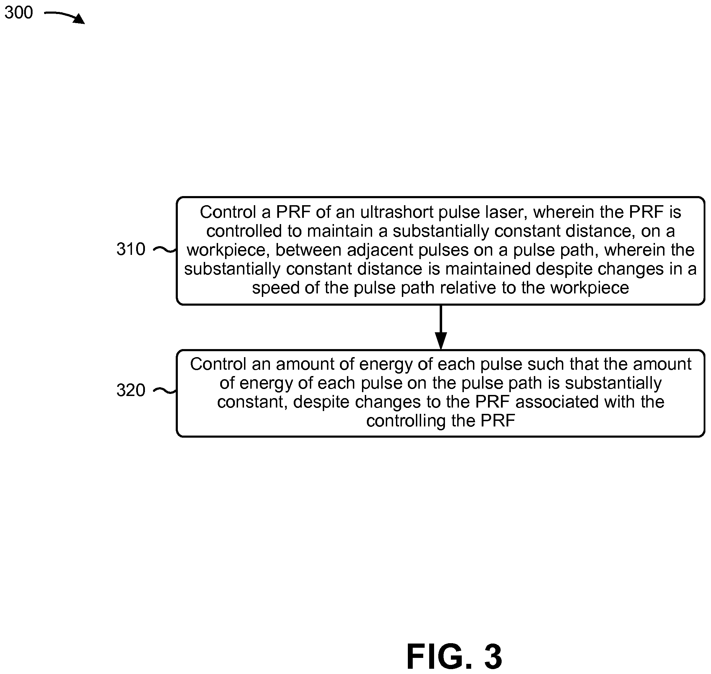

Fig. 3 is a flow chart of an example process 300 associated with controlling a PRF of an ultrashort pulse laser such that a distance between adjacent pulses on a path is substantially constant. Several examples associated with performing example process 300 are described following the description of example process 300.

As shown in Fig. 3, example process 300 may include controlling a PRF of an ultrashort pulse laser, wherein the PRF is controlled to maintain a substantially constant distance, on a workpiece, between adjacent pulses on a path, wherein the substantially constant distance is maintained despite changes in a speed of the path relative to the workpiece (block 310). In some implementations, the substantially constant distance is a distance between a given pair of adjacent pulses on a path, where each pulse of the given pair of pulses is less than approximately $4\mu m$ from a target location of the pulse (e.g., $\pm4\mu m$ from a target location, $\pm0.25\mu m$ from a target location, and/or the like). Thus, among the pairs of adjacent pulses, the substantially constant distance is a distance that is within approximately $8\mu m$ of a target distance (e.g., $\pm8\mu m$ from a target distance, $\pm0.50\mu m$ from a target distance, and/or the like).

In some implementations, the substantially constant distance may be defined with respect to a single pulse and a single target location instead of relative to a pair of adjacent pulses (e.g., $\pm0.25\mu m$ from a target location, within $\pm20\%$ of a beam size at the target location, and/or the like). Thus, in some implementations, the substantially constant distance may be a distance from a target location of a given pulse that is within a particular distance from the target location (e.g., $\pm0.25\mu m$ from a target location, $\pm0.5\mu m$ from a target location, and/or the like). Additionally, or alternatively, the substantially constant distance may be a distance from a target location of a given pulse that is within a distance corresponding to a beam size (e.g., within a distance that is equal to 10% of a beam diameter, within a distance that is equal to 20% of a beam diameter, within a distance that is equal to 40% of a beam diameter, and/or the like). In some implementations, the beam size may be, for example, $50\mu m$, $100\mu m$, $200\mu m$, and/or the like.

The controller may be implemented in software and/or hardware. For example, the controller may include a processor, such as a digital signal processor, a microprocessor, an integrated circuit (e.g., a photonic integrated circuit, an application-specific integrated circuit, etc.), a field-programmable gate array, or the like. The controller may also include other components that interact with the processor, such as a memory device, a communication interface, an input component, and/or an output component. The memory device may store instructions or data used by the processor. The communication interface may permit the processor to communicate with other components of the laser system, to receive commands from external to the laser system, and/or to provide data external to the laser system. The controller may include computer-readable instructions stored in a non-transient computer readable medium for execution by a general purpose computer, reconfigurable hardware (such as FPGAs), application specific hardware (such as ASICs) other electrical and combinations of these implementation technologies.

In some implementations, the controller may include one or more control devices (e.g., control device 275, another controller in the ultrashort pulse laser system 210, a control device of beam delivery system 220, a control device of work surface 230, a controller external to ultrashort pulse laser system 210, a controller external to beam delivery system 220, a controller external to work surface 230, and/or the like). For example, the controller may be a control device included in a particular device of environment 200, may be a combination of control devices in one or more devices of environment 200, or may be a distributed controller associated with two or more control devices of environment 200. Additionally, or alternatively, the controller may control one or more other control devices associated with one or more devices of environment 200.

In some implementations, the controller may control the PRF of ultrashort pulse laser system 210 in accordance with a speed of a path relative to workpiece 240. In other words, the controller may control the PRF of ultrashort pulse laser system 210 based on the relative speed (e.g., such that the PRF is synchronized with or proportional to the relative speed). For example, the controller may determine the relative speed at a given time during the machining process, and may control (e.g., increase, decrease, maintain, and/or the like) the PRF of ultrashort pulse laser system 210 such that a distance of pulses on the path between any adjacent pulses is the same distance.

As a particular example, when the relative speed is a first relative speed (e.g., a comparatively lower speed), the controller may configure the PRF of ultrashort pulse laser system 210 to a first PRF that results in a target pulse spacing at the first relative speed. In this example, when the relative speed increases to a second relative speed (e.g., a comparatively higher speed), the controller may configure the PRF of ultrashort pulse laser system 210 to a second PRF that results in the same target pulse spacing. Here, the second PRF will be higher than the first PRF in order to ensure that the substantially constant pulse spacing is achieved.

In some implementations, the controller may control the PRF by sending a signal that causes the PRF to be set to specific PRF. For example, the controller may send a signal including information that identifies the PRF, and the PRF of ultrashort pulse laser system 210 may be set to the PRF (e.g., until the controller sends a signal that identifies another PRF).

Additionally, or alternatively, the controller may control the PRF by triggering individual pulses. For example, the controller may trigger individual pulses by sending respective trigger signals that cause ultrashort pulse laser system 210 to provide the pulses, and ultrashort pulse laser system 210 may provide the pulses based on the trigger signals.

In some implementations, the controller may control the PRF during an acceleration or deceleration associated with the relative speed. In other words, the controller may control the PRF of ultrashort pulse laser system 210 during an acceleration or deceleration of the relative speed in order to maintain the substantially constant pulse spacing (e.g., the controller controls the PRF while the relative speed changes during an acceleration or deceleration associated with the machining process).

In some implementations, the controller may determine the relative speed based on process information stored or accessible by the controller. For example, the controller may store or have access to information (e.g., a lookup table) that identifies a programmed relative speed at a given instant of time during the machining process, and may control the PRF based on the process information. Additionally, or alternatively, the controller may determine the relative speed based on a measurement of the relative speed performed during the machining process or based on measurements of characteristics (e.g., speed, position, angle, optical alignments) provided by beam delivery system 220, work surface 230 and/or ultrashort pulse laser system 210. In some implementations, the controller may control the PRF in real-time or near real-time (e.g., based on process information, based on a speed measurement, and/or the like) as the relative speed changes during the machining process.

As further shown in Fig. 3, example process 300 may include controlling an amount of energy of each pulse such that the amount of energy of each pulse on the path is substantially constant, despite changes to the PRF associated with the controlling the PRF (block 320). For example, the controller may control an amount of energy of each pulse such that the amount of energy of each pulse on the path is substantially constant, despite changes to the PRF associated with the controlling the PRF. In some implementations, the amount of energy of each pulse is substantially constant when a fluctuation in the amount of energy among the pulses on the path is less than approximately 10% RMS (e.g., less than approximately 5% RMS, such as ±3% or ±2% RMS).

In some implementations, the controller and/or ultrashort pulse laser system 210 may control the pulse energy by maintaining a dynamic equilibrium in stored energy of an amplifier of ultrashort pulse laser system 210, where the stored energy oscillates between an upper boundary and a lower boundary, below a target energy level while waiting to provide a pulse (e.g., in response to a trigger). In some implementations, despite the changes in the PRF, the pulse energy may be controlled such that the pulse energy is substantially constant during the machining process.

In some implementations, the control of the PRF and/or the pulse energy enables improved throughput and/or process quality (e.g., as compared to using a conventional ultrashort pulse laser), as illustrated by examples below.

Notably, while process 300 is described in the context of controlling the PRF of ultrashort pulse laser system 210 such that a distance between pulses is substantially constant, in some implementations, the PRF of ultrashort pulse laser system 210 may be controlled such that, on the workpiece, a distance between locations of adjacent pulses is fully controlled by the controller (e.g., such that any distance within an operable distance range, associated with the machining process, can be selected), without necessarily keeping the distance constant.

Similarly, while process 300 is described in the context of controlling the pulse energy such that the pulse energy is substantially constant despite changes in the PRF of ultrashort pulse laser system 210, in some implementations, the pulse energy of ultrashort pulse laser system 210 may be controlled such that, on the workpiece, the pulse energy is fully controlled by the controller (e.g., such that any pulse energy within an operable energy range, associated with ultrashort pulse laser system 210, can be selected by the controller), without necessarily keeping the pulse energy constant.

In this way, ultrashort pulse laser system 210 may be scanned along a path, relative to workpiece 240 in accordance with a scanning speed that varies along the path, and pulses from ultrashort pulse laser system 210 may be triggered for target locations (e.g., target locations with a substantially constant spacing on workpiece 240) along the path, where a pulse at each target location has a target pulse energy level (e.g., a substantially constant pulse energy).

Although Fig. 3 shows example blocks of process 300, in some implementations, process 300 may include additional blocks, fewer blocks, different blocks, or differently arranged blocks than those depicted in Fig. 3. Additionally, or alternatively, two or more of the blocks of process 300 may be performed in parallel.

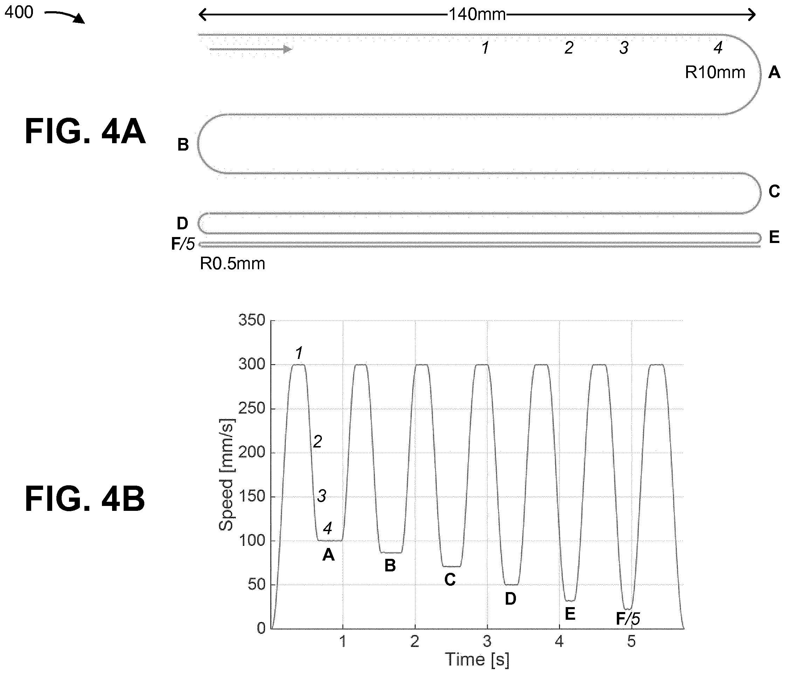

Figs. 4A-4G are diagrams and photographs associated with a processing example 400 illustrating and comparing use of ultrashort pulse laser system 210 with a random trigger feature for a machining process according to an example embodiment against other laser systems. In some implementations, the machining process associated with example 400 may be associated with, for example, cutting, scribing, marking, filamentation, perforating, a stealth-process (e.g., stealth-dicing), dicing, structuring, surface-texturing, annealing, heat-treating, welding, inducing a refractive index-change (e.g., in a waveguide), texture-modification (e.g., in metals, changing texture of a steel by laser treatment, and/or the like), laser-cleaning, ablating, or otherwise modifying a workpiece. In some implementations, the machining process associated with example 400 may be used for machining a metallic material (e.g., copper), a semiconductor, a hard-metal, a ceramic material or another type of hard material, steel, a brittle material (e.g., a silicon-based material, glass, hardened glass, sapphire), and/or the like. As a particular example, in some implementations, the machining process associated with example 400 may be associated with, for example, modifying (e.g., perforating) a workpiece comprising a silicon-based workpiece (e.g., glass). As described below, use of ultrashort pulse laser system 210 with the random trigger feature results in improved throughput and/or process quality associated with the machining process (e.g., as compared to performing the machining process using an ultrashort pulse laser with a fixed PRF, an ultrashort pulse laser configured with a pseudo-trigger feature, or an ultrashort pulse laser with a pre-amplifier pulse picker).

Fig. 4A is a top view of an example path 400 associated with testing different laser systems to machine process a workpiece 240. As shown in Fig. 4A, the example path 400 on a workpiece 240 is a sequence of straight sections and curved sections (e.g., curved sections A through F), where each successive curved section has a comparatively smaller radius (e.g., from 10 millimeters (mm) at curved section A to 0.5mm at curved section F). The arrow indicates the direction of travel of the path 400 relative to a stationary workpiece 240. This particular example path 400 was selected to demonstrate a strongly varying speed profile (as shown in Fig. 4B) and to qualitatively evaluate processing quality of different laser systems at locations 1 through 5. Other paths (e.g., for machining workpieces for production instead of testing machining processes) would be readily apparent to those skilled in the art.

Fig. 4B is a graphical representation of a speed over time for the example path 400 relative to workpiece 240. In Fig. 4B, speeds labeled A through F correspond to speeds at respective curved sections A through F in Fig. 4A. Similarly, speeds labeled 1 through 5 correspond to speeds at locations 1 through 5 identified in Fig. 4A. As shown in Fig. 4B, from a start time (e.g., Time = 0s), the speed of the example path 400 relative to workpiece 240 increases along a first straight section to a maximum speed (e.g., approximately 300mm/s) near location 1, maintains the maximum speed for a period of time (e.g., approximately 0.2s) and then decreases through speeds and locations 2 and 3 to a relative speed 4 for navigating curved section A (e.g., approximately 100mm/s, which can be a maximum speed at which the particular geometry at curved section A can be navigated with a particular quality). As further shown, the relative speed is constant while navigating curved section A (e.g., because the radius of curved section A is constant) and, upon entering a second straight section of the path, the relative speed again increases to the maximum. The relative speed increases and decreases in a similar manner when navigating the remainder of the path (e.g., through and between curved sections B through F). Notably, as a feature size (e.g., a radius) of the curved sections decreases (e.g., from curved section B to curved section F), the relative speed, associated with these curved sections, decreases in order to navigate these smaller features. For example, at location 5 in curved section F, the speed of the path relative to workpiece 240 is approximately 25mm/s (i.e., one-quarter of the relative speed in curved section A).

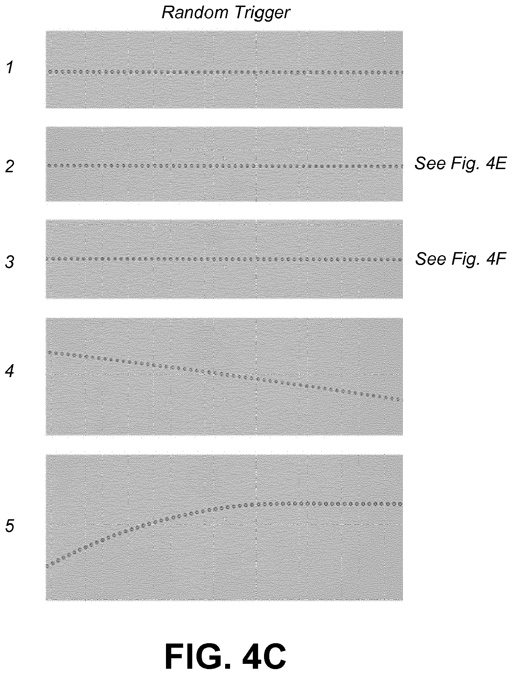

Fig. 4C includes photographs of traces on a workpiece 240 illustrating example process results at locations 1 through 5 after performing the machining process following the example path 400 of Fig. 4A using ultrashort pulse laser system 210 with a random trigger feature. In this example, the workpiece was a polished silicon wafer and each pulse was a single shot. As illustrated in Fig. 4C, when the machining process is performed using ultrashort pulse laser system 210 with a random trigger feature, the PRF of ultrashort pulse laser system 210 can be controlled such that a distance between a given pair of adjacent marks on the trace is substantially constant (e.g., when each mark of the give pair of adjacent marks is less than approximately $4\mu m$ from a target location, such as $\pm 0.25\mu m$ from a target location). This resulted from evenly spaced pulses along example path 400 because each pulse generated one of the marks visible in Fig. 4C. In other words, despite the relative speed of the example path 400 varying throughout the machining process (e.g., being different near each of locations 1 through 5), the pulse spacing and resulting mark spacing in the trace is substantially constant. In some implementations, ultrashort pulse laser system 210 with the random trigger feature achieves substantially constant spacing by controlling the PRF of ultrashort pulse laser system 210 based on the speed of the path relative to workpiece 240, as described above.

Moreover, as illustrated by the uniformity among the size, shape and area of effect of the marks in the trace illustrated in Fig. 4C (and lack of debris), pulse energy of the pulses is controlled such that the pulse energy is substantially constant, despite changes in the PRF (e.g., changes in the PRF associated with controlling the PRF in accordance with the relative speed).

Thus, as illustrated in Fig. 4C, ultrashort pulse laser system 210 may be scanned along a path, relative to workpiece 240 in accordance with a scanning speed that varies along the path, and pulses from ultrashort pulse laser system 210 may be triggered at target locations (e.g., target locations with a substantially constant spacing on workpiece 240) along the path, where a pulse at each target location has a target pulse energy level (e.g., a substantially constant pulse energy).

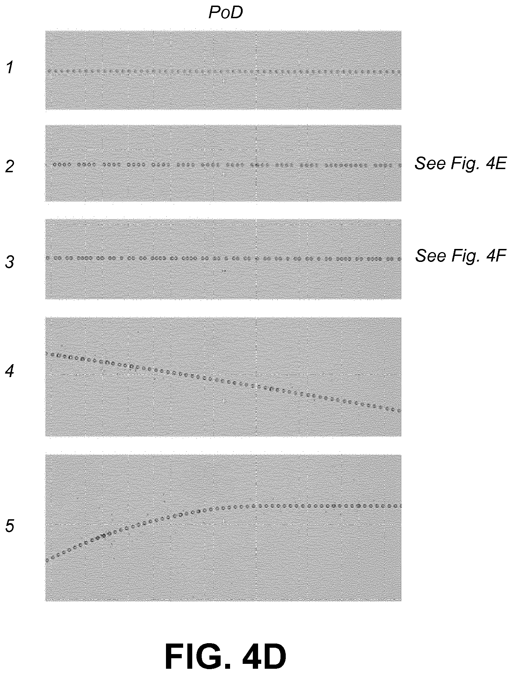

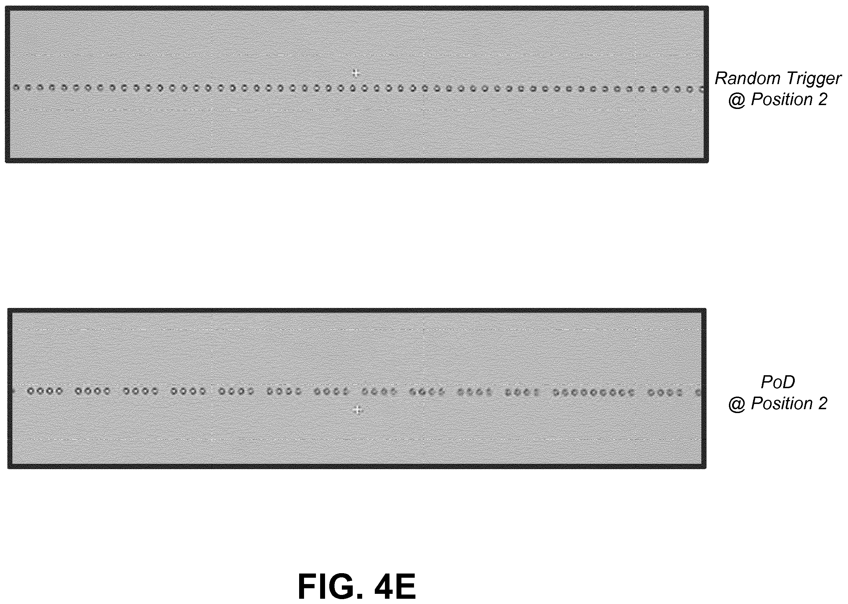

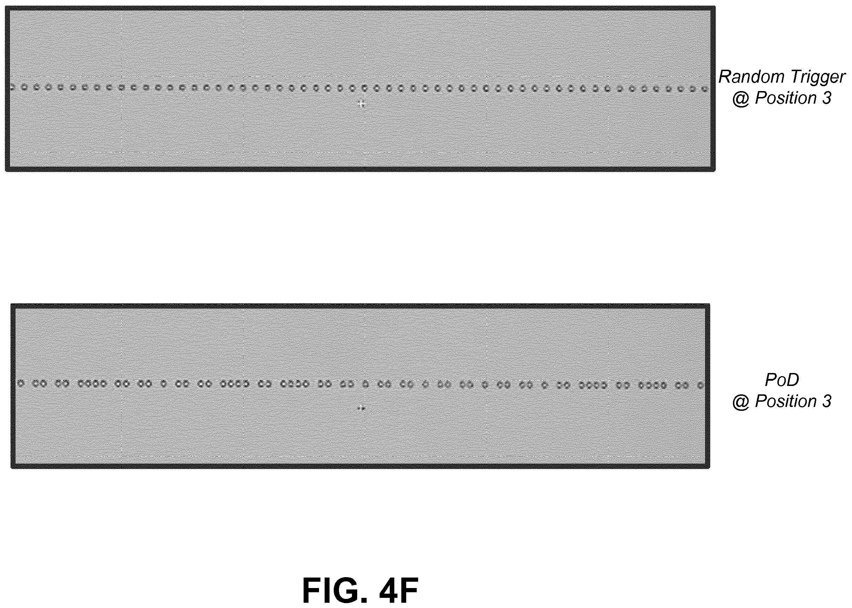

Fig. 4D is photographs of traces on another workpiece illustrating example results at locations 1 through 5 after performing the machining process using an ultrashort pulse laser system with a PoD feature (i.e., a pseudo-trigger feature that uses a post-amplifier pulse-picker). Notably, the machining process associated with Fig. 4D uses the same trigger signal sequence as the machining process associated with Fig. 4C. As illustrated in Fig. 4D, when the machining process is performed using an ultrashort pulse laser system with the PoD feature, a distance between a given pair of adjacent marks on the trace is non-constant near some locations (e.g., as visible in the photographs at location 2 and location 3, which are locations at which a rate of change of the relative speed is greatest). This resulted from un-evenly spaced pulses along example path 400 (e.g., due to the rate of change of the relative speed). In other words, the PoD feature cannot provide substantially constant pulse spacing when the speed of the path differs during the machining process (e.g., due to the timing jitter inherent to the PoD feature, as described above, repetitive gaps due to a beat-note, or because of limitations from the pulse-picker). Thus, process quality is degraded (e.g., as compared to using ultrashort pulse laser system 210 with the random trigger feature). Comparisons that further illustrate the differences in pulse spacing near locations 2 and 3 are provided in Figs. 4E and 4F, respectively.

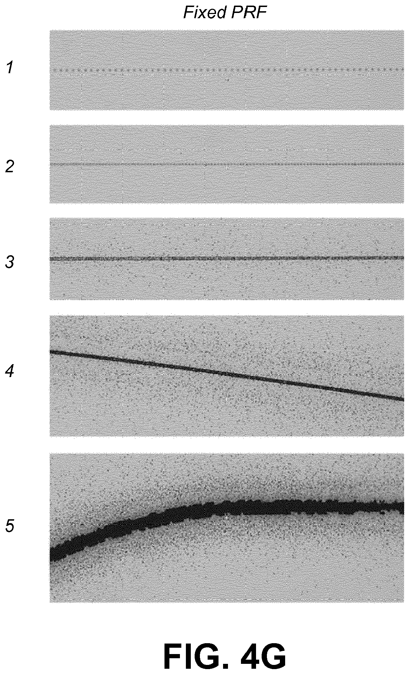

Fig. 4G is photographs of traces on a further workpiece illustrating example results at locations 1 through 5 after performing the machining process using an ultrashort pulse laser system with a fixed PRF. As illustrated in Fig. 4G, when the machining process is performed using an ultrashort pulse laser system with a fixed PRF, distances between pairs of adjacent marks on the trace decrease as the relative speed decreases. For example, while marks are approximately equidistant near location 1, marks are at least partially overlapped near location 3, and are further overlapped near location 5. Here, process quality is significantly degraded since a surface of workpiece 240 is distorted and/or damaged as result of the overlapping pulses. Additionally, debris is present near locations 3, 4, and 5 when using the ultrashort pulse laser with the fixed PRF (e.g., as indicated by small black flecks above and below the marks near locations 3, 4, and 5). In some cases, such distortion, damage, and/or debris indicates complete failure of the machining process (e.g., such that workpiece 240 may be unusable). Notably, the damage at location 5 (or another location with poor process quality) may be avoided by defining the machining process at a lowest relative speed (e.g., 25mm/s at location 5) being reached throughout the entire process (i.e., a maximum speed at the curve with the smallest radius). In other words, such damage can be avoided in this example by performing the entire machining process at 25mm/s (e.g., and selecting a fixed PRF accordingly). However, while process quality may be improved using such a technique, throughput is significantly reduced. For example, in the above case, throughput could be reduced by up to a factor of ten (e.g., when comparing the minimum relative speed of 25mm/s to the maximum relative speed of 300 mm/s). Thus, such a solution is not desirable in practice and/or may be untenable from a cost perspective.

Thus, as illustrated by the comparisons in process quality associated with the workpieces machined following example path 400, performing the machining process using ultrashort pulse laser system 210 with the random trigger feature provides improved process quality (e.g., through evenly spaced pulses with constant energy, through reduced timing jitter, and/or the like) as compared to using an ultrashort pulse laser with a fixed PRF or an ultrashort pulse laser configured with a pseudo-trigger feature.

As indicated above, Figs. 4A-4G are provided merely as examples illustrating some possible improvements. Other examples are possible and may differ from what was described with regard to Figs. 4A-4G.

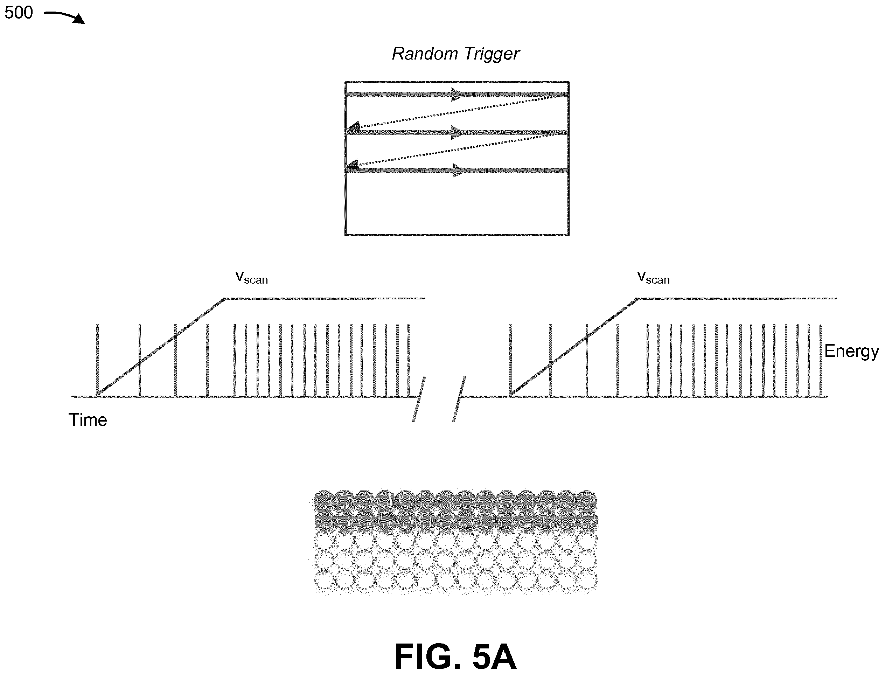

Figs. 5A-5E are diagrams of a processing example 500 illustrating use of ultrashort pulse laser system 210 with a random trigger feature for a machining process according to an example embodiment and illustrating use of other laser systems with other machining methods. In some implementations, the machining process associated with example 500 may be associated with, for example, cutting, scribing, marking, filamentation, perforating, a stealth-process (e.g., stealth-dicing), dicing, structuring, surface-texturing, annealing, heat-treating, welding, inducing a refractive index-change (e.g., in a waveguide), texture-modification (e.g., in metals, changing texture of a steel by laser treatment, and/or the like), laser-cleaning, ablating, or otherwise modifying a workpiece. In some implementations, the machining process associated with example 500 may be used for machining a metallic material (e.g., copper), a semiconductor, a hard-metal, a ceramic material or another type of hard material, steel, a brittle material (e.g., a silicon-based material, glass, hardened glass, sapphire), and/or the like. As described below, use of ultrashort pulse laser system 210 with the random trigger feature results in improved throughput and/or process quality associated with the machining process (e.g., as compared to performing the machining process using an ultrashort pulse laser with a fixed PRF or an ultrashort pulse laser configured with a pseudo-trigger feature).

Fig. 5A is a diagram associated with performing the machining process of example 500 using ultrashort pulse laser system 210 with the random trigger feature. The upper diagram in Fig. 5A is a top view of a path associated with performing the machining process with ultrashort pulse laser system 210 with a random trigger feature. As shown, the path may include a series of straight sections across a workpiece, where each straight section is performed in a same direction (e.g., from left to right in Fig. 5A). As indicated by the dotted lines in the path in Fig. 5A, after completing a given straight section of the path, ultrashort pulse laser system 210 may stop providing pulses while the path is moved to a start location for a next straight section.

The middle diagram of Fig. 5A is a graphical representation of controlling individual pulses (e.g. represented by the vertical lines) or controlling a PRF of ultrashort pulse laser system 210 (e.g., represented by the spacing between the vertical lines) in relation to a speed of the path relative to workpiece 240 (e.g., represented by the line labeled $v_{scan}$) along beginning portions of two example straight sections of the path. As shown in the left portion of the middle diagram, at a start of a first straight section of the machining process, the controller can control the PRF of ultrashort pulse laser system 210 in accordance with the relative speed. For example, as the relative speed increases (e.g., indicated by the angled portion of the $v_{scan}$ line) in the beginning portion of the first straight section, the controller controls the timing of individual pulses or the PRF such that the PRF increases at a rate that is proportional to the acceleration. Here, when the relative speed reaches a maximum (e.g., indicated by the horizontal portion of the $v_{scan}$ line), the controller controls the PRF such that the PRF remains constant. As a result, and a shown in the lower portion of Fig. 5A (e.g., by the top row of circular marks on a workpiece representing the beginning portion of the first straight section), the distance between pulses, or marks on workpiece 240, remains constant. Notably, the left portion of the middle diagram in Fig. 5A shows pulses near the beginning of a first straight section. While not shown, along the remainder of the first straight section, the controller can control the PRF such that the PRF remains constant (and thus the distance between marks stays constant) until a point near an end of the first straight section at which the relative speed decelerates (e.g., in order to allow the path change direction and move to a start of a second straight section). Here, as the path decelerates (i.e., as the relative speed decreases) the controller controls the PRF of the laser to the end of the first straight section of the machining process in accordance with the relative speed. For example, as the relative speed decreases, the controller controls the timing of individual pulses or the PRF such that the PRF decreases at a rate that is proportional to the deceleration. Upon reaching the end of the first straight section, ultrashort pulse laser system 210 may stop providing pulses, and the path moves (e.g., along a dotted line shown in the top portion of Fig. 5A) to a start location of a second straight section of the path. In some implementations, an acceleration and/or a relative speed at which the path moves from the end of the first straight section to the start of the second straight section may the same as, or different from, the acceleration and/or the relative speed of the path during the machining of the first straight section. As indicated in the right portion of the middle diagram of Fig. 5A, the second straight section of the path may be machined in a similar manner as that of the first straight section. As shown in the lower portion of Fig. 5A (e.g., by the second row of circular marks on a workpiece representing the beginning portion of the second straight section), the distance between pulses, or marks on workpiece 240 in the second section remains constant.

Notably, due to the use of ultrashort pulse laser system 210 with the random trigger feature, marks in each straight section of the path can be aligned on the workpiece 240 (e.g., as indicated by the alignment of the first column of marks in the lower portion of Fig. 5A). Further, throughput is optimized by allowing pulses to be provided to workpiece 240 during acceleration and/or deceleration of the relative speed and by allowing the path to move directly from an end of a given straight section to a start of a next straight section (e.g., as compared to using a skywriting technique, as described below).

Moreover, as shown in the middle portion of Fig. 5A, the controller and/or ultrashort pulse laser system 210 can control the pulse energy of the pulses such that the pulse energy is constant across each straight section of the path despite changes in timing of individual pulse or despite changes in the PRF.

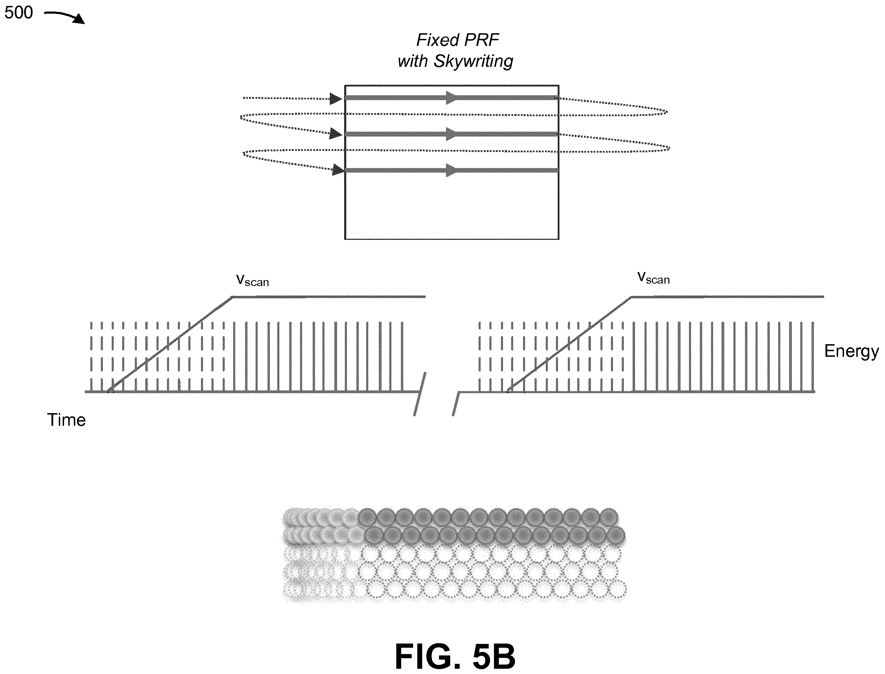

Fig. 5B is a diagram associated with performing the machining process of example 500 using a conventional ultrashort pulse laser system with a fixed PRF and using a skywriting technique (herein referred to as a skywriting ultrashort pulse laser system with a fixed PRF). The upper diagram in Fig. 5B is a top view of a path associated with performing the machining process with the skywriting ultrashort pulse laser system with the fixed PRF. As shown, the path may include a series of straight sections across a workpiece, where each straight section is performed in a same direction (e.g., from left to right in Fig. 5B) at a constant velocity (e.g. zero acceleration). As indicated by the dotted curved lines in the path in Fig. 5B, before and after completing a given straight section of the path, ultrashort pulse laser system 210 may not provide pulses during time periods when the relative velocity is accelerating, decelerating, or while the path is moved to a start location for a next straight section.

The middle diagram of Fig. 5B is a graphical representation of pulses (e.g. represented by the vertical lines) of the fixed PRF of the skywriting ultrashort pulse laser with the fixed PRF (e.g., fixed PRF represented by the constant spacing between the vertical lines) in relation to a speed of a path relative to the workpiece 240 (e.g., represented by the line labeled $v_{scan}$) along beginning portions of straight sections of the path. As shown, the PRF is fixed throughout the machining process. Further, as shown in the left portion of the middle diagram by the dashed vertical lines, at a start of a first straight section of the machining process, the PRF remains fixed, but no pulses are provided to workpiece 240 (i.e., pulse are blocked) until the relative speed has reached the maximum. In other words, the dotted lines are the pulses that are not provided to workpiece 240, but have a fixed PRF during an acceleration of the path during the machining process. This is because, when using the skywriting technique, the path is accelerated (e.g., the dotted path before each straight section) to the maximum speed before pulses are provided to workpiece 240 (e.g., in order to provide constant pulse spacing on the workpiece).

Notably, the left portion of the middle diagram in Fig. 5B shows pulses near a beginning of the first straight section. While not shown, along the remainder of the first straight section, the PRF remains fixed. Upon reaching the end of the first straight section, the skywriting ultrashort pulse laser stops providing pulses, and then the path decelerates (e.g., outside of the straight section while no pulses are being provided), changes direction, and accelerates to a start location of a second straight section of the path. As indicated in the right portion of the middle diagram of Fig. 5B, the second straight section of the path may be machined in a similar manner as that of the first straight section (e.g., including accelerating and decelerating outside of the straight section).

The lower portion of Fig. 5B illustrates pulses or marks at beginning portions of the first and section straight sections. Notably, due to the use of the skywriting ultrashort pulse laser with the fixed PRF, initial pulses in each straight section of the path may not be aligned (e.g., as indicated by the misalignment of the first column of pulses or marks in the lower portion of Fig. 5B). This results from timing jitter associated with providing the initial pulse. For example, when no measures are taken to synchronize the skywriting ultrashort pulse laser and a beam delivery system, there is no fixed phase correlation between the fixed PRF of the skywriting ultrashort pulse laser and the timing of the beam delivery system. As such, the beam delivery system will start the second straight section (and other straight sections) at an arbitrary time with respect to the frequency of the skywriting ultrashort pulse laser (e.g., since timing of a next laser pulse is not known to the beam delivery system). As a result, a first pulse at a start of the second straight section can vary in time with respect to the beam delivery timing, resulting in the lateral offset of marks illustrated in the lower portion of Fig. 5B.

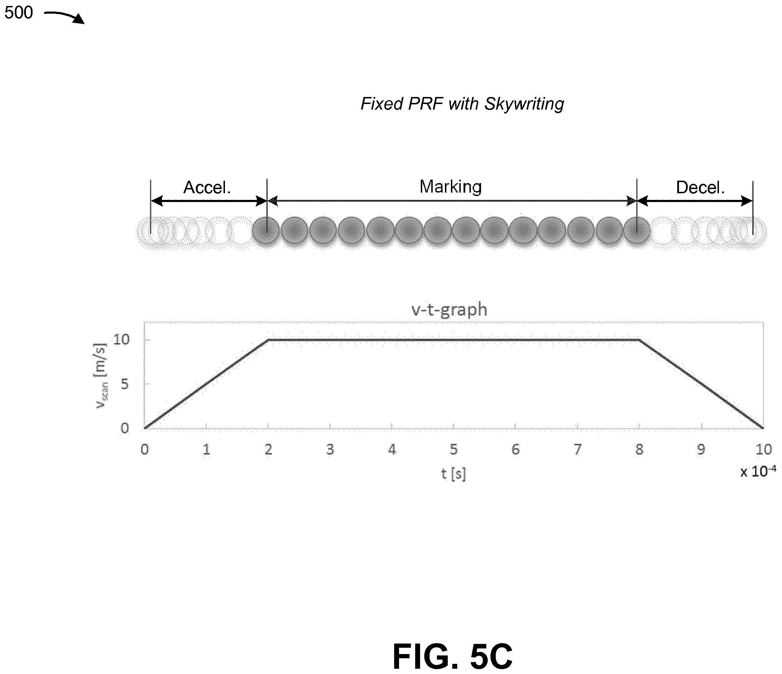

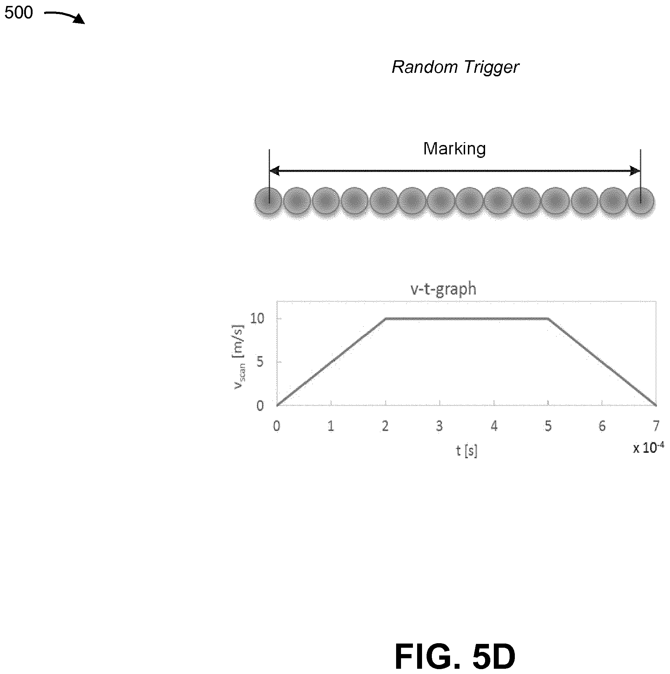

As shown, the skywriting technique may allow a distance between adjacent pulses or marks on the workpiece to be substantially constant. However, this technique increases processing time (i.e., reduces throughput) and may not guarantee alignment of marks between rows (e.g., without implementing synchronization technique). Fig. 5C includes diagrams illustrating a total processing time for a given straight section of the machining process when using a skywriting ultrashort pulse laser with a fixed PRF, while Fig. 5D includes diagrams illustrating a total processing time for a given straight section of the machining process when using ultrashort pulse laser system 210 with the random trigger feature.

As shown in Fig. 5C, when using the skywriting ultrashort pulse laser with the fixed PRF, a movement, associated with machining a given straight section, includes an acceleration section in which no pulses are provided, a constant speed section in which pulses are provided, and a deceleration in which no pulses are provided. Lengths of the individual sections in time and space depend on a target constant speed, a marking length and a maximum acceleration. As shown, when using the skywriting ultrashort pulse laser with the fixed PRF, only the section with constant speed can contribute to the machining process. The time ($t_{sky}$) for one motion sequence can be found by the following formula:

$$t_{sky} = 2 \cdot t_a + t_v = 2 \cdot \frac{v_{scan}}{a} + \frac{s_{mark}}{v_{scan}}$$

where $2 \cdot t_a$ is an amount of time to accelerate and decelerate, $t_v$ is a time at the constant speed, $v_{scan}$ is the constant speed, $a$ is the acceleration and deceleration, and $s_{mark}$ is the length of the straight section (i.e., a marking length).

Depending on the length of $s_{mark}$, there exists an optimum speed, leading to a minimal processing time. This optimum speed is not necessarily the maximum speed at which the path can be moved (e.g., a maximum speed of a motion system). Especially for short marking lengths, if the target speed is increased beyond the optimum speed, acceleration and deceleration times exceed a time reduction of the higher speed during constant velocity period, such that the final processing time increases. The optimum speed when using the skywriting ultrashort pulse laser with the fixed PRF can be found by the following formula:

$$v_{opt,sky} = \sqrt{\frac{s_{mark} \cdot a}{2}}$$

Notably, describing the optimum speed as a function of the section length shows a fast increase of the optimum speed, which often exceeds the maximum speed associated with moving the path. Therefore, the optimum speed can be chosen to minimize the total machining time typically only for small lengths. For larger lengths, the maximum speed is typically the optimum speed.

As shown in Fig. 5D, when using ultrashort pulse laser system 210 with the random trigger feature, a movement, associated with machining a given straight section, again includes a constant acceleration section, a constant speed section, and a constant deceleration. However, pulses can be provided in each section (e.g., during acceleration and deceleration in accordance with the relative speed, as described above). Here, since the sections with constant acceleration and deceleration can be used for the machining process, the section length is divided into a length of $2 \times sa$ (corresponding to the acceleration and deceleration sections) and $sv$ (for the section with constant speed $v_{scan}$), which can be determined as:

$$s_v = s_{mark} - 2 \cdot s_a = s_{mark} - \frac{v_{scan}^2}{a}$$

with $t_a = \frac{v_{scan}}{a}$, and $t_v = \frac{s_v}{v_{scan}} = \frac{s_{mark}}{v_{scan}} - \frac{v_{scan}}{a}$,

a total time when using ultrashort pulse laser system 210 with the random trigger feature can be calculated using the following formula:

$$t_{\text{random}} = 2 \cdot t_a + t_v = \frac{v_{const}}{a} + \frac{s_{mark}}{v_{const}}$$

When using ultrashort pulse laser system 210 with the random trigger feature, the optimum speed is given by:

$$v_{opt,\text{random}} = \sqrt{s_{mark} \cdot a}$$

Thus, the optimum speed is higher for the same section length when using the random trigger functionality.

Further, setting the processing times into relation indicates the following relationship:

$$\frac{t_{sky}}{t_{random}} = \sqrt{2} = 1.41$$

This means that in the given example, if both machining processes are performed at their respective optimum speeds, use of the skywriting ultrashort pulse laser with the fixed PRF takes roughly 1.4 times longer (i.e., 40% longer) than use of the ultrashort pulse laser system 210 with the random trigger feature. Thus, use of ultrashort pulse laser system 210 with the random trigger feature can improve throughput of the machining process (e.g., as compared to the skywriting ultrashort pulse laser with the fixed PRF).

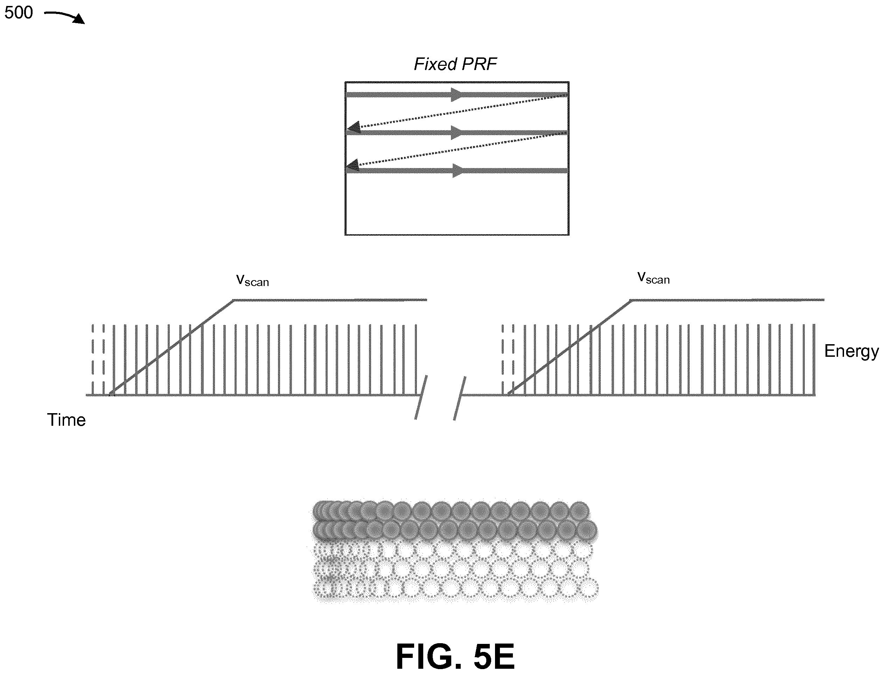

Fig. 5E is a diagram associated with performing the machining process of example 500 using an ultrashort pulse laser system with a fixed PRF without implementing the skywriting technique and using the same path as Fig. 5A . The upper diagram in Fig. 5E is a top view of a path associated with performing the machining process with the ultrashort pulse laser system with the fixed PRF without the skywriting technique. As shown, the path is the same path as shown in Fig. 5A.

The middle diagram of Fig. 5E is a graphical representation of pulses (e.g. represented by the vertical lines) of the fixed PRF of the ultrashort pulse laser with the fixed PRF, without skywriting, (e.g., represented by spacing between the vertical lines) in relation to a speed of a path relative to workpiece 240 (e.g., represented by the line labeled $v_{scan}$) along beginning portions of two straight sections of the path. As shown, the PRF is fixed throughout the machining process. Further, as shown in the left portion of the middle diagram, pulses are provided at the fixed PRF from the start of the machining process in a beginning portion of a first straight section as soon as the path enters the path, regardless of the relative speed. Thus, as shown in the top row of the lower portion of Fig. 5E, the pulses overlap in the beginning portion of the first straight section. As further shown, the pulses may be evenly spaced after the path reaches a constant velocity (e.g., when the path stops accelerating). Notably, the left portion of the middle diagram in Fig. 5E shows pulses near the beginning of the first straight section. While not shown, along the remainder of the first straight section, the ultrashort pulse laser, without skywriting, will maintain the fixed PRF even as the path decelerates (i.e., as the relative speed decreases) near an end of the first straight section. Thus, a similar pulse overlap will be present near the end of the first straight section. Upon reaching the end of the first straight section, the ultrashort pulse laser with the fixed PRF stops providing pulses, and the path moves to a start location of a next straight section (e.g., in a manner similar to that described in association with Fig. 5A). As indicated in the right portion of the middle diagram of Fig. 5E, the second straight section of the path may be machined in a similar manner as that of the first straight section.

A result at the beginning of the first and second straight sections when machining using the ultrashort pulse laser with the fixed PRF, without skywriting, on the same path as Fig. 5A is shown in the lower portion of Fig. 5E. As shown, since pulses are provided at the beginning of each straight section during acceleration while the PRF is fixed, two or more pulses near the beginning of each straight section overlap (e.g., while the path accelerates), which significantly reduces process quality as compared to the result shown in Fig. 5A. A similar overlap will be present at an end of each straight section (e.g., since the fixed PRF will result in overlapping pulses as the path decelerates).

Thus, as illustrated by the comparisons in process quality and throughput associated with example 500, performing the machining process using ultrashort pulse laser system 210 with the random trigger feature provides improved process quality (e.g., through evenly spaced pulses with constant energy, through reduced timing jitter, and/or the like) and/or increased throughput (e.g., faster processing time) as compared to using an ultrashort pulse laser with a fixed PRF, without skywriting, on the same path as Fig. 5A or as compared to a skywriting ultrashort pulse laser with a fixed PRF.

As indicated above, Figs. 5A-5E are provided merely as examples demonstrating advantages of the machining process using ultrashort pulse laser system 210 with the random trigger feature when the relative speed between path and workpiece changes during machining. Other examples are possible and may differ from what was described with regard to Figs. 5A-5E.

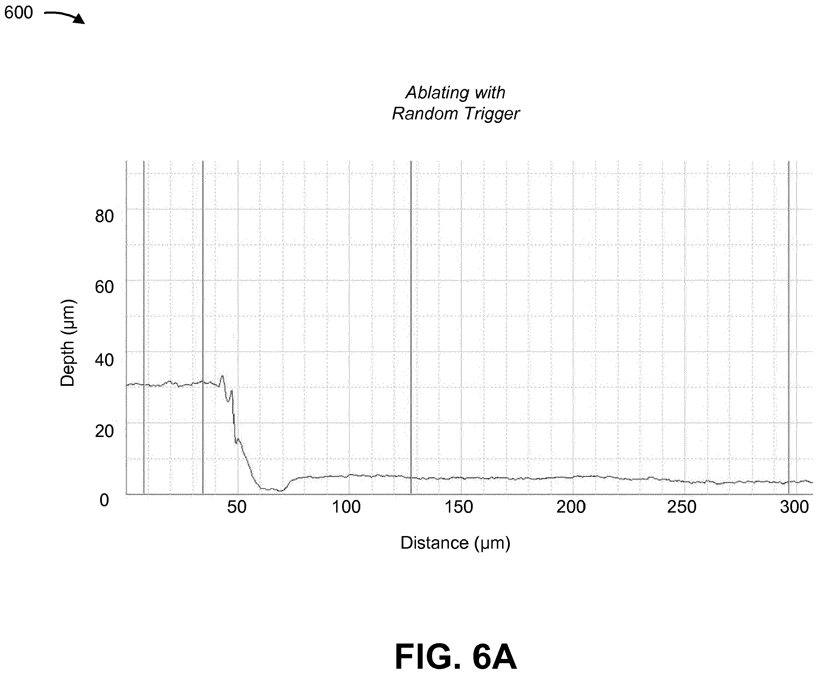

Figs. 6A-6D are diagrams of a processing example 600 illustrating and comparing use of ultrashort pulse laser system 210 with a random trigger feature for a machining process according to an example embodiment against other laser systems using other machining methods. The machining process associated with example 600 is associated with ablating a copper square. As described below, use of ultrashort pulse laser system 210 with the random trigger feature results in improved throughput and/or process quality associated with the machining process (e.g., as compared to performing the machining process using an ultrashort pulse laser with a fixed PRF or an ultrashort pulse laser configured with a pseudo-trigger feature).

Fig. 6A is a graphical representation of engraving depth versus lateral distance when ablating a beginning portion of a copper square using ultrashort pulse laser system 210 with the random trigger feature.

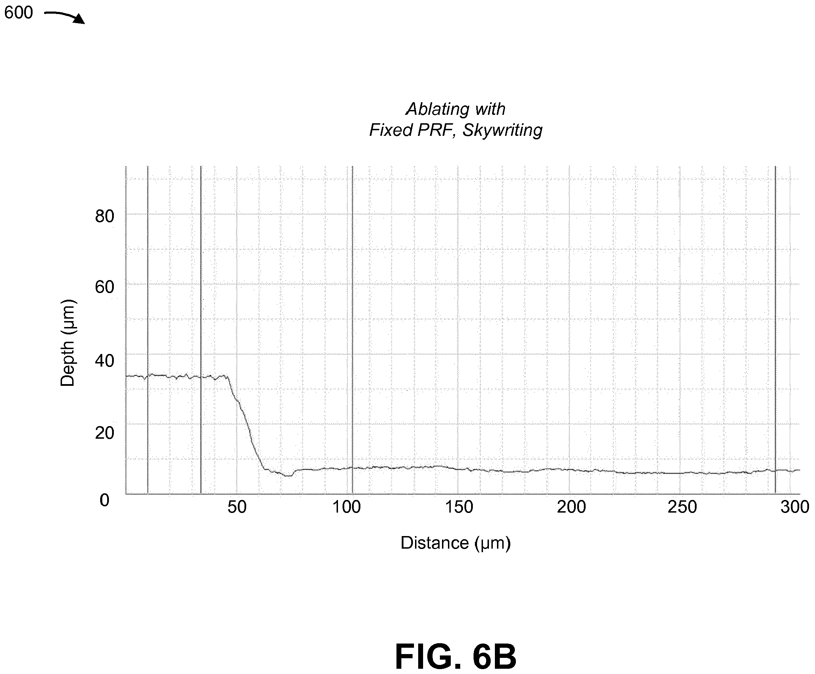

Fig. 6B is a graphical representation of engraving depth versus lateral distance when ablating a beginning portion of a copper square using an ultrashort pulse laser with a fixed PRF and using a skywriting technique.

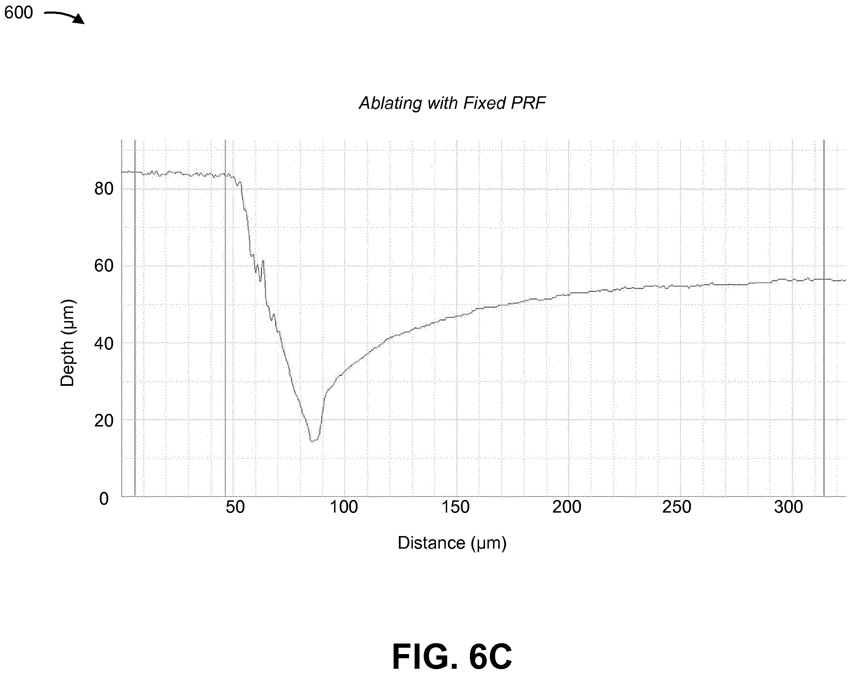

Fig. 6C is a graphical representation of engraving depth versus lateral distance when ablating a beginning portion of a copper square using an ultrashort pulse laser with a fixed PRF without using the skywriting technique.

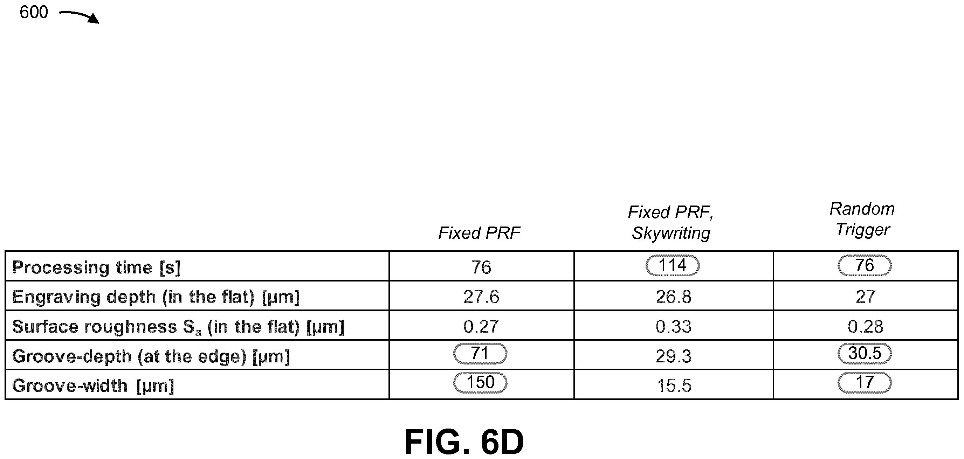

Fig. 6D is a diagram comparing results of use of ultrashort pulse laser system 210 with the random trigger feature, the skywriting ultrashort pulse laser with the fixed PRF, and the ultrashort pulse laser with the fixed PRF without skywriting.

As illustrated by comparing Fig. 6A and 6B, process quality (e.g., in terms of engraving depth, surface roughness, constant groove depth, and groove width) in a beginning portion of the machining process may be comparable or slightly improved when using ultrashort pulse laser system 210 with the random trigger feature as compared to process quality achieved using the skywriting ultrashort pulse laser with the fixed PRF. Further, as shown in Fig. 6D, the processing time when using ultrashort pulse laser system 210 with the random trigger feature (e.g., 76s) is significantly less than the processing time (e.g., 114s) when using the skywriting ultrashort pulse laser with the fixed PRF. Thus, use of ultrashort pulse laser system 210 with the random trigger improves throughput as compared to use of the skywriting ultrashort pulse laser with the fixed PRF, while maintaining or improving process quality.

Further, as illustrated by comparing Fig. 6A and 6C, some aspects of process quality (e.g., engraving depth and surface roughness) in a beginning portion of the machining process may be comparable when using ultrashort pulse laser system 210 with the random trigger feature as compared to the ultrashort pulse laser with the fixed PRF without skywriting. However, as illustrated by comparing Figs. 6A and 6C (and as indicated in Fig. 6D), other aspects of process quality (e.g., groove depth and groove width) are significantly reduced with use of the ultrashort pulse laser with the fixed PRF without skywriting. Thus, use of ultrashort pulse laser system 210 with the random trigger improves process quality as compared to use of the ultrashort pulse laser with the fixed PRF without skywriting.

As illustrated by the comparisons in process quality and throughput associated with example 600, performing the machining process using ultrashort pulse laser system 210 with the random trigger feature provides improved process quality (e.g., through evenly spaced pulses with constant energy, through reduced timing jitter, and/or the like) and/or increased throughput (e.g., faster processing time) as compared to using a ultrashort pulse laser with a fixed PRF without skywriting, or as compared to a skywriting ultrashort pulse laser with a fixed PRF.

As indicated above, Figs. 6A-6D are provided merely as examples. Other examples are possible and may differ from what was described with regard to Figs. 6A-6D.

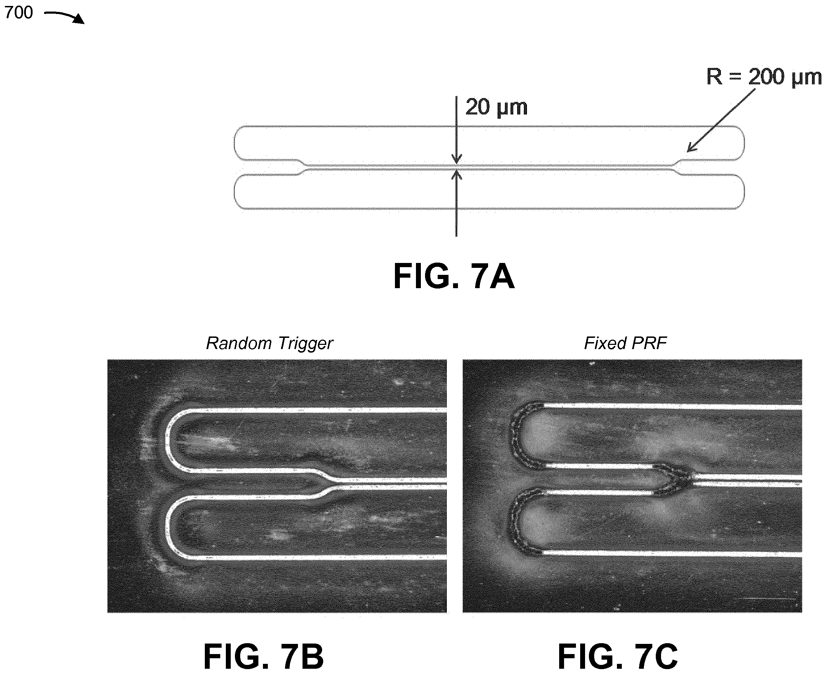

Figs. 7A-7C are diagrams of a processing example 700 illustrating and comparing use of ultrashort pulse laser system 210 with a random trigger feature for a machining process according to an example embodiment against another laser system. The machining process associated with example 700 is associated with cutting stainless steel. As described below, use of ultrashort pulse laser system 210 with the random trigger feature results in improved process quality associated with the machining process (e.g., as compared to performing the machining process using a conventional ultrashort pulse laser with a fixed PRF on a same path as that used by ultrashort pulse laser 210 with the random trigger feature).

Fig. 7A is a top view of a path associated with the machining process of example 700. As shown in Fig. 7A, the path may include a sequence of straight sections and curved sections.

Fig. 7B is a diagram of an example result of cutting the path of Fig. 7A in stainless steel using ultrashort pulse laser system 210 with the random trigger feature.

Fig. 7C is a diagram of an example result of cutting the path of Fig. 7A in stainless steel using an ultrashort pulse laser with a fixed PRF.

As illustrated by comparing Figs. 7B and 7C, cutting the path using ultrashort pulse laser system 210 with the random trigger feature provides improved process quality as a compared to using the conventional ultrashort pulse laser with the fixed PRF on the same path. For example, as shown in Fig. 7B, curved features (e.g., in which a relative speed will be comparatively lower) have the same process quality as straight features when using ultrashort pulse laser system 210 with the random feature. In this example, process quality is ensured in these curved features based on controlling the PRF of ultrashort pulse laser system 210 according to the relative speed, as described above, to maintain desired distance between pulses delivered to the workpiece. Conversely, as shown in Fig. 7C, curved features have a reduced process quality (e.g., due to overlapping pulses caused by the fixed PRF) when the cutting is performed with the conventional ultrashort pulse laser with the fixed PRF.

Thus, as illustrated by the comparison in process quality associated with example 700, performing the machining process using ultrashort pulse laser system 210 with the random trigger feature provides improved process quality (e.g., through evenly spaced pulses with constant energy, through reduced timing jitter, and/or the like) as compared to using a conventional ultrashort pulse laser with a fixed PRF on the same path.

As indicated above, Figs. 7A-7C are provided merely as examples. Other examples are possible and may differ from what was described with regard to Figs. 7A-7C.

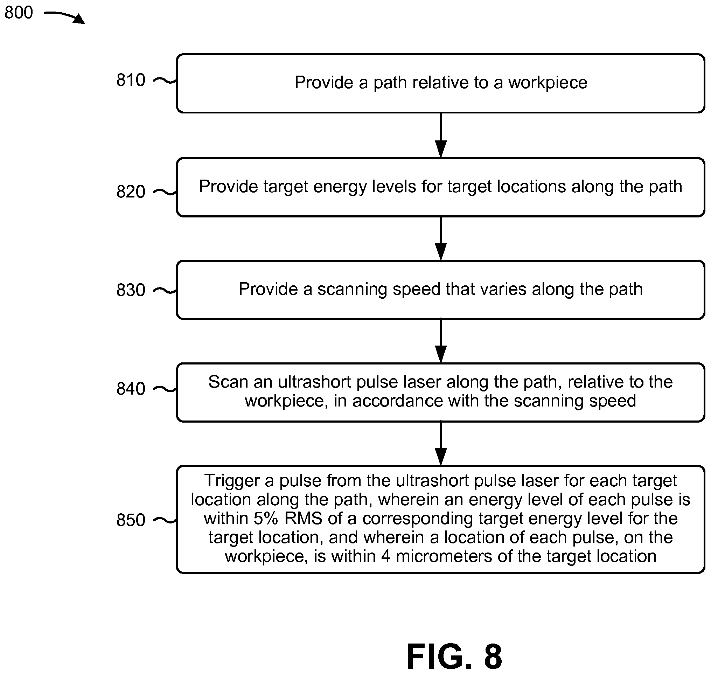

Fig. 8 is a flow chart of an example process 800 associated with scanning an ultrashort pulse laser along a path, relative to a workpiece, in accordance with a scanning speed that varies along the path, and triggering a pulse from the ultrashort pulse laser for each target location along the path.

As shown in Fig. 8, example process 800 may include providing a path relative to a workpiece (block 810). For example, the controller may provide a path relative to workpiece 240, as described herein.

As further shown in Fig. 8, example process 800 may include providing target energy levels for target locations along the path (block 820). For example, the controller may provide target energy levels for target locations along the path, as described herein.

As further shown in Fig. 8, example process 800 may include providing a scanning speed that varies along the path (block 830). For example, the controller may provide the scanning speed that varies along the path, as described herein.

As further shown in Fig. 8, example process 800 may include scanning an ultrashort pulse laser along the path, relative to the workpiece, in accordance with the scanning speed (block 840). For example, the controller may scan an ultrashort pulse laser along the path, relative to workpiece 240, in accordance with the scanning speed, as described herein. In some implementations, scanning the ultrashort pulse laser along the path may include scanning a beam from the ultrashort pulse laser (e.g., a beam from ultrashort pulse laser system 210) along the path.

As further shown in Fig. 8, example process 800 may include triggering a pulse from the ultrashort pulse laser for each target location along the path (block 850). For example, the controller may trigger a pulse from the ultrashort pulse laser for each target location along the path, as described herein.

In some implementations, an energy level of each pulse is within approximately 10% RMS of a corresponding target energy level for the target location. In some implementations, an energy level of each pulse is within approximately 5% RMS of a corresponding target energy level for the target location, as described herein.

In some implementations, a location of each pulse, on workpiece 240, is within 4 micrometers of the target location, as described herein.

Although Fig. 8 shows example blocks of process 800, in some implementations, process 800 may include additional blocks, fewer blocks, different blocks, or differently arranged blocks than those depicted in Fig. 8. Additionally, or alternatively, two or more of the blocks of process 800 may be performed in parallel.

Notably, the examples described above are described in the context of controlling the PRF of ultrashort pulse laser system 210 and/or triggering pulses such that a distance between locations of pulses on workpiece 240 is substantially constant. However, in some implementations, the PRF of ultrashort pulse laser system 210 may be controlled and/or pulses may be triggered such that, on the workpiece, a distance between locations of adjacent pulses is fully controlled by the controller. Here, full control refers to the capability of the controller to control pulse distancing (e.g., select any distance within an operable distance range associated with the machining process), without necessarily keeping the distance constant. In some implementations, the pulse distancing may be controlled such that one or more pairs of adjacent pulses overlap.

Similarly, the examples described above are described in the context of controlling the pulse energy such that the pulse energy is substantially constant despite changes in the PRF of ultrashort pulse laser system 210. However, in some implementations, the pulse energy of ultrashort pulse laser system 210 may be controlled such that, on the workpiece, the pulse energy is fully controlled by the controller. Here, full control refers to the capability of the controller to control the pulse energy (e.g., select any pulse energy within an operable energy range associated with ultrashort pulse laser system 210), without necessarily keeping the pulse energy constant.

Further, in some implementations, an ultrashort pulse laser may be scanned along a path, relative to a workpiece, in accordance with a scanning speed that varies along the path. Here, pulses from the ultrashort pulse laser may be triggered for target locations along the path, where each target location has a target pulse energy level. In some implementations, the energy level of a pulse is within approximately 10% RMS of a corresponding target energy level for the target location, and a location of the pulse on the workpiece is within approximately 4 micrometers of the target location, as described above.

Further, while the implementations described above are described in the context of machining processes performed in a two-dimensional space (e.g., on a flat surface of workpiece 240), the techniques and apparatuses described herein may be applied to a machining process performed in a three-dimensional space.

Some implementations described herein provide machining processes using an ultrashort pulse laser with a random trigger feature in order to provide improved and/or optimized throughput and/or process quality. In some implementations, the improved and/or optimized throughput and/or process quality can be achieved because the random trigger feature allows the PRF of the ultrashort pulse laser to be controlled in accordance with a speed of a path relative to a workpiece during a machining process, thereby allowing a distance between adjacent pulses to be fully controlled (e.g., kept substantially constant or selected). Moreover, the improved and/or optimized throughput and/or process quality can be achieved because the random trigger feature allows an amount of energy of a given pulse to be fully controlled despite changes to the PRF.

In some implementations, the random trigger functionality allows the ultrashort pulse laser to provide pulses with low energy fluctuations (e.g., less than approximately 10% RMS) with low timing jitter (e.g., less than $\pm 25$ ns) at a given scanning speed (e.g., 25mm/s, 10m/s, 25 m/s or more, and/or the like). This level of stability and accuracy means that even at a relatively fast scanning speed (e.g., 20m/s), pulse positioning uncertainty on the workpiece may be small (e.g., less than $\pm 0.25$ micrometers ($\mu$m)), which is negligible in most practical micromachining applications.

The foregoing disclosure provides illustration and description, but is not intended to be exhaustive or to limit the implementations to the precise form disclosed. Modifications and variations are possible in light of the above disclosure or may be acquired from practice of the implementations. For example, in some implementations, ultrashort pulse laser system 210 may include one or more other features that work in combination with or in addition to the random trigger feature, such as a feature for providing a burst of laser pulses (e.g., MegaBurst™, FlexBurst™, and/or the like). In such cases, each of the pulses may comprise pulse burst (e.g., a burst of an arbitrary number of pulses), and a burst energy of a given pulse burst may be controlled such that the burst energy is substantially constant despite changes to the PRF associated with the controlling of the PRF. Further, a burst envelope shape of the given pulse burst may be controlled such that the burst envelope shape is substantially unchanged despite changes to the PRF associated with the controlling of the PRF.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related items, and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

**Claims**

1. A machining process, associated with a workpiece, comprising:

   controlling, by a control device, a pulse repetition frequency (PRF) of an ultrashort pulse laser,

   wherein the PRF is controlled to maintain a substantially constant distance, on the workpiece, between adjacent pulses on a path,
   wherein the substantially constant distance is maintained despite changes
   in a speed of the path relative to the workpiece, and
   wherein an amount of energy of each pulse on the path is substantially constant despite changes to the PRF associated with controlling the PRF.

2. The machining process of claim 1, wherein the substantially constant distance is a distance that is less than or equal to 0.50 micrometers from a target distance.

3. The machining process of claim 1, wherein a fluctuation in the amount of energy among the adjacent pulses on the path is less than approximately 2% root mean square (RMS).

4. The machining process of claim 1, wherein the PRF is proportional to the speed of the path relative to the workpiece at a given time during the machining process.

5. The machining process of claim 1, further comprising:

   determining the speed of the path relative to the workpiece; and
   wherein controlling the PRF of the ultrashort pulse laser comprises:

   controlling the PRF based on the speed of the path relative to the workpiece.

6. The machining process of claim 1, further comprising:

controlling the amount of energy of each pulse on the path despite the changes to the PRF associated with the controlling the PRF.

7. The machining process of claim 1, wherein the machining process is a process associated with modifying a brittle material.

8. A machining process, associated with a workpiece, comprising:

   outputting, by an ultrashort pulse laser and onto the workpiece during the machining process, pulses based on a pulse repetition frequency (PRF);
   controlling, by a control device, the PRF of the ultrashort pulse laser based on changes in a speed of a path relative to the workpiece during the machining process,

   wherein the PRF of the ultrashort pulse laser is controlled such that, on the workpiece, a distance between locations of adjacent pulses on the path is controlled by the control device,
   wherein the distance is any distance within an operable distance range associated with the machining process; and
   wherein a pulse energy of the pulses on the path is controlled despite changes to the PRF associated with controlling the PRF,
   wherein the pulse energy of the pulses is any energy within an operable energy range of the ultrashort pulse laser.

9. The machining process of claim 8, wherein the PRF of the ultrashort pulse laser is controlled such that the distance between locations of adjacent pulses is substantially constant.

10. The machining process of claim 8, wherein the pulse energy of the pulses is controlled such that the pulse energy of the pulses is substantially constant.

11. The machining process of claim 8, wherein each of the pulses comprises a pulse burst with an arbitrary number of pulses,

   wherein a burst energy of a given pulse burst is controlled such that the burst energy is substantially constant despite changes to the PRF associated with the controlling of the PRF,
   wherein a burst envelope shape of the given pulse burst is controlled such
   that the burst envelope shape is substantially unchanged despite changes to the

12. A machining process, associated with a workpiece, comprising:

triggering, by a control device, pulses of an ultrashort pulse laser in accordance with changes in a speed of a path relative to the workpiece during the machining process,
wherein a rate at which the pulses are triggered changes to maintain a
substantially constant distance, on the workpiece, between adjacent pulses on the path;
and controlling, by the control device or the ultrashort pulse laser, pulse energy of the pulses, wherein the pulse energy is controlled such that the pulse energy is substantially constant despite changes in the rate at which the pulses are triggered.

13. The machining process of claim 12, wherein a pulse repetition frequency (PRF) of the ultrashort pulse laser is proportional to the speed of the path relative to the workpiece at a given time during the machining process,
wherein the PRF is associated with the triggering of the pulses.

14. The machining process of claim 12, further comprising:

determining the speed of the path relative to the workpiece; and
wherein triggering the pulses of the ultrashort pulse laser comprises:

triggering the pulses based on the speed of the path relative to the workpiece.

15. A machining process, associated with a workpiece, comprising:

providing a path relative to the workpiece;
providing target energy levels for target locations along the path;
providing a scanning speed that varies along the path;
scanning, by a control device, an ultrashort pulse laser along the path, relative to the workpiece, in accordance with the scanning speed; and
triggering, by the control device, a pulse from the ultrashort pulse laser for each target location along the path,

wherein an energy level of each pulse is within 5% root mean square (RMS) of a corresponding target energy level for the target location, and
wherein a location of each pulse, on the workpiece, is within 4 micrometers of the

target location.

100

*Fixed PRF*

Energy

Time

$v_{scan}$ = FAST

$v_{scan}$ = SLOW

$v_{scan}$ = FAST

*Heat
Affected
Zone*

**FIG. 1A**

EP 3 354 394 A1

PRF Proportional to
Relative Speed

Energy

⇐ **Controlled
Pulse Energy**

Time

$v_{scan}$ = FAST

$v_{scan}$ = SLOW

**Controlled
Pulse
Spacing**

$v_{scan}$ = FAST

**FIG. 1B**

EP 3 354 394 A1

200

Ultrashort Pulse
Laser System
210

Beam Delivery
System 220

Pulses

Workpiece
240

Work Surface
230

**FIG. 2A**

210

**FIG. 2B**

EP 3 354 394 A1

FIG. 3

FIG. 4A

FIG. 4B

EP 3 354 394 A1

Random Trigger

See Fig. 4E

See Fig. 4F

FIG. 4C

PoD

See Fig. 4E

See Fig. 4F

**FIG. 4D**

FIG. 4E

*Random Trigger*
*@ Position 3*

*PoD*
*@ Position 3*

**FIG. 4F**

Fixed PRF

FIG. 4G

FIG. 5A

500

*Fixed PRF*
*with Skywriting*

V$_{scan}$

V$_{scan}$

Energy

Time

EP 3 354 394 A1

# FIG. 5B

Fixed PRF with Skywriting

Accel. — Marking — Decel.

v-t-graph

$V_{scan}$ [m/s]

t [s]

FIG. 5C

500

500

EP 3 354 394 A1

*Random Trigger*

FIG. 5D

500

Fixed PRF

FIG. 5E

*Ablating with*
*Random Trigger*

**FIG. 6A**

EP 3 354 394 A1

Ablating with
*Fixed PRF, Skywriting*

**FIG. 6B**

EP 3 354 394 A1

Ablating with Fixed PRF

EP 3 354 394 A1

**FIG. 6C**

| | Fixed PRF | Fixed PRF, Skywriting | Random Trigger |
|---|---|---|---|
| Processing time [s] | 76 | 114 | 76 |
| Engraving depth (in the flat) [μm] | 27.6 | 26.8 | 27 |
| Surface roughness $S_a$ (in the flat) [μm] | 0.27 | 0.33 | 0.28 |
| Groove-depth (at the edge) [μm] | 71 | 29.3 | 30.5 |
| Groove-width [μm] | 150 | 15.5 | 17 |

## FIG. 6D

700

$20 \ \mu m$

$R = 200 \ \mu m$

**FIG. 7A**

Random Trigger

Fixed PRF

**FIG. 7B**          **FIG. 7C**

EP 3 354 394 A1

800 →

| 810 | Provide a path relative to a workpiece |

↓

| 820 | Provide target energy levels for target locations along the path |

↓

| 830 | Provide a scanning speed that varies along the path |

↓

| 840 | Scan an ultrashort pulse laser along the path, relative to the workpiece, in accordance with the scanning speed |

↓

| 850 | Trigger a pulse from the ultrashort pulse laser for each target location along the path, wherein an energy level of each pulse is within 5% RMS of a corresponding target energy level for the target location, and wherein a location of each pulse, on the workpiece, is within 4 micrometers of the target location |

## FIG. 8

Europäisches
Patentamt

European
Patent Office

Office européen
des brevets

## EUROPEAN SEARCH REPORT

Application Number

EP 18 15 2127

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 188 326 A1 (LUMENTUM OPERATIONS LLC [US]) 5 July 2017 (2017-07-05) <br> * figures 1-5 * <br> * paragraphs [0005], [0026], [0044] - [0046], [0074], [0082] * <br> ----- | 1-15 | INV. <br> B23K26/00 <br> B23K26/359 <br> B23K26/0622 <br> B23K26/06 |
| A | US 2011/298156 A1 (HOOPER ANDREW [US] ET AL) 8 December 2011 (2011-12-08) <br> * the whole document * <br> ----- | 1-15 | |

TECHNICAL FIELDS
SEARCHED      (IPC)

B23K

The present search report has been drawn up for all claims

| Place of search | Date of completion of the search | Examiner |
|---|---|---|
| Munich | 20 June 2018 | Weyand, Tim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 15 2127

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2018

| Patent document cited in search report | | Publication date | Patent family member(s) | Publication date |
|---|---|---|---|---|
| EP 3188326 | A1 | 05-07-2017 | CN 106936063 A | 07-07-2017 |
| | | | EP 3188326 A1 | 05-07-2017 |
| | | | JP 6275805 B2 | 07-02-2018 |
| | | | JP 2017120890 A | 06-07-2017 |
| | | | JP 2018056597 A | 05-04-2018 |
| | | | KR 20170080485 A | 10-07-2017 |
| | | | TW 201725815 A | 16-07-2017 |
| | | | TW 201807913 A | 01-03-2018 |
| | | | US 9570877 B1 | 14-02-2017 |
| | | | US 2017194759 A1 | 06-07-2017 |
| US 2011298156 | A1 | 08-12-2011 | CN 103477427 A | 25-12-2013 |
| | | | EP 2691982 A2 | 05-02-2014 |
| | | | JP 2014514754 A | 19-06-2014 |
| | | | KR 20140006032 A | 15-01-2014 |
| | | | TW 201244861 A | 16-11-2012 |
| | | | US 2011298156 A1 | 08-12-2011 |
| | | | WO 2012135036 A2 | 04-10-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9570877 B, Ammann